# EUROPÄISCHE PATENTSCHRIFT

(11) **EP 2 955 152 B1**
(45) Veröffentlichungstag und Bekanntmachung des Hinweises auf die Patenterteilung: **30.09.2020**
(21) Anmeldenummer: 15176791.0
(22) Anmeldetag: 27.12.2011
(51) Int. Cl.: B82Y 20/00, G11B 9/00, G11C 11/00, H05B 33/00

(54) **INFORMATIONSSPEICHER, OPTISCHER INFORMATIONSTRÄGER, VORRICHTUNG ZUM SPEICHERN VON INFORMATIONEN IN INFORMATIONSSPEICHER, VERWENDUNG EINES INFORMATIONSSPEICHERS ALS PASSIVES DISPLAY UND SENSORANORDUNG**
INFORMATION STORAGE DEVICE, OPTICAL INFORMATION CARRIER, DEVICE FOR STORING INFORMATION IN AN INFORMATION STORAGE DEVICE, USE OF AN INFORMATION STORAGE DEVICE AS PASSIVE DISPLAY AND SENSOR ASSEMBLY
UNITE DE STOCKAGE D'INFORMATIONS, SUPPORT D'INFORMATIONS OPTIQUE, DISPOSITIF DE STOCKAGE D'INFORMATIONS DANS UNE UNITE DE STOCKAGE D'INFORMATIONS, UTILISATION D'UNE UNITE DE STOCKAGE D'INFORMATIONS EN TANT QU'AFFICHAGE PASSIF ET AGENCEMENT DE CAPTEUR

(30) Priorität: 28.12.2010 DE 102010064237; 26.05.2011 DE 102011076535
(43) Veröffentlichungstag der Anmeldung: 16.12.2015
(62) Teilanmeldung aus: 11815614.0
(73) Patentinhaber: Fraunhofer-Gesellschaft zur Förderung der angewandten Forschung e.V., 80686 München (DE)
(72) Erfinder: MARTIN, Jörg, 09235 Burkhardtsdorf (DE); MORSCHHAUSER, Andreas, 09120 Chemnitz (DE); OTTO, Thomas, 09249 Taura (DE); GESSNER, Thomas, 09113 Chemnitz (DE); PIASTA, Doreen, 04159 Leipzig (DE); KIESSLING, Torsten, 02829 Girbigsdorf (DE); REUTER, Danny, 09126 Chemnitz (DE)
(74) Vertreter: Hersina, Günter

(56) Entgegenhaltungen:
- GB-A- 2 283 128
- GB-A- 2 439 595
- GB-A- 2 451 884
- GB-A- 2 460 666
- US-A- 3 331 063
- US-A1- 2003 089 899
- US-B1- 6 720 589
- HAO HUANG ET AL: "Bias-induced photoluminescence quenching of single colloidal quantum dots embedded in organic semiconductors", NANO LETTERS, AMERICAN CHEMICAL SOCIETY, US, Bd. 7, Nr. 12, 23. November 2007 (2007-11-23), Seiten 3781-3786, XP002656385, ISSN: 1530-6984, DOI: 10.1021/NL072263Y [gefunden am 2007-11-23]
- T LUNDSTROM ET AL: "Exciton storage in semiconductor self-assembled Quantum dots", SCIENCE, Bd. 286, 17. Dezember 1999 (1999-12-17), Seiten 2312-2314, XP055225024, DOI: 10.1126/science.286.5448.2312
- FISCHBEIN M ET AL: "CdSe nanocrystal quantum-dot memory", APPLIED PHYSICS LETTERS, AMERICAN INSTITUTE OF PHYSICS, 2 HUNTINGTON QUADRANGLE, MELVILLE, NY 11747, Bd. 86, Nr. 19, 3. Mai 2005 (2005-05-03), Seiten 193106-193106, XP012065373, ISSN: 0003-6951, DOI: 10.1063/1.1923189
- A. J. BENNETT ET AL: "Electric-field-induced coherent coupling of the exciton states in a single quantum dot", NATURE PHYSICS, Bd. 6, Nr. 12, 3. Oktober 2010 (2010-10-03), Seiten 947-950, XP055225082, GB ISSN: 1745-2473, DOI: 10.1038/nphys1780
- KLIMOVV I ETAL: "Single-exciton optical gain in semiconductor nanocrystals", NATURE, NATURE PUBLISHING GROUP, UNITED KINGDOM, Bd. 447, 24. Mai 2007 (2007-05-24), Seiten 441-446, XP007902527, ISSN: 0028-0836, DOI: 10.1038/NATURE05839
- KANNAN E S ET AL: "Charge trapping in quantum dot memory devices with different dot densities", JOURNAL OF PHYSICS D: APPLIED PHYSICS, INSTITUTE OF PHYSICS PUBLISHING LTD, GB, Bd. 43, Nr. 22, 9. Juni 2010 (2010-06-09), Seite 225101, XP020171157, ISSN: 0022-3727
- GELLER M ET AL: "Towards an universal memory based on self-organized quantum dots", PHYSICA E - LOW-DIMENSIONAL SYSTEMS AND NANOSTRUCTURES, ELSEVIER SCIENCE BV, NL, Bd. 40, Nr. 6, 1. April 2008 (2008-04-01), Seiten 1811-1814, XP022763350, ISSN: 1386-9477, DOI: 10.1016/J.PHYSE.2007.09.108 [gefunden am 2008-04-01]
- PETTERSSON H ET AL: "Case study of an InAs quantum dot memory: Optical storing and deletion of charge", APPLIED PHYSICS LETTERS, AMERICAN INSTITUTE OF PHYSICS, 2 HUNTINGTON QUADRANGLE, MELVILLE, NY 11747, Bd. 79, Nr. 1, 2. Juli 2001 (2001-07-02), Seiten 78-80, XP012028772, ISSN: 0003-6951, DOI: 10.1063/1.1382628

## Beschreibung

Die vorliegende Erfindung bezieht sich auf Informationsspeicher, auf optische Informationsträger, auf eine Verwendung eines Informationsspeichers für ein passives Display, auf eine Vorrichtung zum Speichern von Informationen in einem Informationsspeicher und auf ein Verfahren zum Speichern von Informationen. Insbesondere bezieht sich die vorliegende Erfindung auf das Speichern von Informationen in einer Nanopartikelanordnung auf elektrischem Weg und auf ein Auslesen der gespeicherten Information auf optischem Weg zu einem späteren Zeitpunkt.

Die vorliegende Erfindung bezieht sich ferner auf eine Sensoranordnung unter Verwendung des Informationsspeichers, auf ein mechanisches Bauteil mit integrierter Sensoranordnung zur Überwachung und Anzeige einer auf das mechanische Bauteil einwirkenden mechanischen Belastung, auf ein Verfahren zum Anzeigen und Speichern einer auf ein mechanisches Bauteil ausgeübten mechanischen Belastung, und auf die Verwendung einer Halbleiter-Nanokristallanordnung zur Visualisierung (Speicherung und/oder Anzeige) einer von einem kraftsensitiven Element erfassten, auf ein mechanisches Bauteil einwirkenden mechanischen Belastung. Insbesondere bezieht sich die vorliegende Erfindung auf Verfahren und Vorrichtungen zum Detektieren, Speichern und Auswerten von statischen oder dynamischen Belastungen an mechanischen Bauteilen unter Verwendung eines kraftsensitiven Elements und eines mit dem kraftsensitiven Element verbundenen Anzeigeelements, wobei das Anzeigeelement eine Halbleiter-Nanokristallanordnung zum Bereitstellen einer Fluoreszenzeigenschaft aufweist, die basierend auf einer elektrischen Ladungsmenge, die der Halbleiter-Nanokristallanordnung von dem kraftsensitiven Element zugeführt wird, änderbar bzw. einstellbar ist.

In vielen Bereichen des täglichen Lebens werden Informationen verschiedenster Art verarbeitet und für einen reibungslosen Ablauf vieler Vorgänge sind Informationen erforderlich. Die Informationen werden einem Informationsempfänger auf unterschiedlichste Weise zur Verfügung gestellt. Dazu gehören u.a. akustische Signale aber auch optische Informationen.

Es gibt verschiedenste Möglichkeiten, Menschen optische Informationen zur Verfügung zu stellen. Im Wesentlichen lassen sich diese Möglichkeiten in zwei Gruppen unterteilen: Zum Einen Vorrichtungen, bei denen die Information während eines Herstellungsprozesses auf oder eingebracht werden, und zum Anderen Vorrichtungen, bei denen die Information während des Betriebs geändert werden kann.

Zu der ersten Gruppe gehören beispielsweise Schilder, Zeitungen, usw.. Im Allgemeinen wird die Information durch die gezielte Verteilung von Materialien wie Tinte, Farbe, Partikeln oder vieles andere auf der Vorrichtung relativ dauerhaft zur Verfügung gestellt. Ein Beispiel für eine derartige Vorrichtung ist in der internationalen Patentanmeldung mit der Veröffentlichungsnummer WO 2006/055873 A2 und dem Titel "Enhanced Electrolumineszent Sign" gezeigt. Eine weitere Möglichkeit, solche Vorrichtungen zu nutzen, ist zum Beispiel eine Veränderung dieser Vorrichtung selbst. So beinhaltet zum Beispiel die Beschädigung eines Garantielabels die Information, dass ein Gerät, das das Garantielabel trägt, vorher geöffnet wurde. Diese Labels sind teilweise sehr komplex, um unter Anderem Falsifikate durch Hologramme oder ähnliches zweifelsfrei identifizieren zu können. Die oben erwähnte gezielte Verteilung von Tinte, Farbe, Partikel usw. kann typischerweise nur schwer oder unter Umständen auch gar nicht mehr rückgängig gemacht werden. Somit ist die von der Vorrichtung gespeicherte Information in der Regel statisch, d.h. eine Änderung der Information ist in den meisten Fällen nicht vorgesehen, sobald die Vorrichtung erstmalig mit der Information versehen wurde.

Zu der zweiten Gruppe, also Vorrichtungen, bei denen die Information während des Betriebs geändert werden kann, gehören z.B. Fernsehgeräte, mobile Kommunikationsgeräte, Displays (beispielsweise bestehend aus Leuchtdioden (LEDs "light emitting diodes"), organischen Leuchtdioden (OLEDs "organic light emitting diodes") oder Flüssigkristallanzeigen (LCDs "liquid crystal displays"). Vorrichtungen der zweiten Gruppe benötigen zu ihrem Betrieb typischerweise permanent Energie.

Als besondere Gruppe von Displays sei an dieser Stelle auf sogenannte Quantenpunktdisplays ("Quantum Dot Displays") verwiesen, welche den Effekt der Elektrolumineszenz ausnutzen. Quantenpunktdisplays enthalten Nanopartikel, womit typischerweise ein Verbund von einigen tausend Atomen oder Molekülen bezeichnet wird. Häufig weisen die Nanopartikel eine regelmäßige Struktur auf, wie zum Beispiel eine Kristallstruktur. Bei Quantenpunktdisplays werden elektrisch generierte Löcher und Elektronen in geeigneter Weise zu den Nanopartikeln geleitet, in denen die Ladungsträger unmittelbar unter Aussendung von Licht rekombinieren. Quantenpunktdisplays werden beispielsweise in folgenden Patentanmeldungen behandelt: WO 2009/058172 A1 ("Device containing nonblinking Quantum Dots"), US 2009/0091689 A1 ("Display Device"), US 2006/0170331 A1 ("Electroluminscent Device with Quantum Dots"), US 2010/0109521 A1 ("Quantum Dot Electroluminescent Device"), WO 2008/112062 A2 ("Quantum Dot Light Emitting Device") und US 2008/0309234 A1 ("Alternating Current Driving Type Quantum Dot Electroluminescent Device").

Durch eine geeignete Ansteuerung können mit Hilfe von Quantenpunktdisplays Symbole, Buchstaben oder Bilder dargestellt werden. Mit Abschalten der in Form der zugeführten elektrischen Ladungsträger von außen zugeführten Energie ist dieser Effekt jedoch beendet.

Neben Vorrichtungen aus den genannten ersten und zweiten Gruppen gibt es noch Vorrichtungen, die zwischen der ersten Gruppe und der zweiten Gruppe eingeordnet werden können. Es handelt sich hierbei beispielsweise um Schultafeln oder Weißwandtafeln. Bei Schultafeln werden die Informationen durch Aufbringen von Kreide auf eine Schiefer- oder Kunststoffoberfläche solange fixiert, bis die Kreide abgewaschen oder -gewischt wird. Weißwandtafeln basieren auf einem ähnlichen Prinzip, wobei jedoch anstelle von Kreide eine Tinte verwendet wird, die an der Oberfläche der Weißwandtafel haftet. Zum Löschen der Information wird die Weißwandtafel mittels eines Tuchs abgewischt, an dem die Tinte besser haftet, als an der Weißwandtafel. Schultafeln und Weißwandtafeln verbinden somit eine energielose Speicherung der Information mit einer häufigen Wiederbeschreibbarkeit. Aufgrund ihres Funktionsprinzips geht aber mit der Benutzung von Schultafeln und Weißwandtafeln eine Staubentwicklung bzw. eine Verschmutzungsgefahr einher.

Eine gespeicherte Information kann auch als Indikator für den Zustand von z.B. einem mechanischem Bauteil verwendet werden. Auf vielen technischen Gebieten unter Verwendung mechanischer Systeme, wie zum Beispiel beim Flugzeugbau, Fahrzeugbau, Maschinenbau und anderen Gebieten, zur Gewichtsreduktion und zur Verbesserung von Systemeigenschaften in wachsendem Umfang Legierungen, Keramikmaterialien, Kunststoffe und Verbundwerkstoffe eingesetzt. Insbesondere bei Verbundwerkstoffen sind oft Schädigungen im Material, die zum Beispiel durch mechanische Überbelastungen hervorgerufen wurden, nicht unmittelbar sichtbar und können somit unentdeckt bleiben. Diese Materialschädigungen können aber zum plötzlichen unvorhergesehenen Bruch bzw. Versagen des mechanischen Bauteils führen, was den Ausfall ganzer Baugruppen oder des gesamten Systems zur Folge haben kann.

Mechanische Bauteile werden zum optimalen Einsatz der verwendeten Ressourcen und zur Kostenoptimierung beim jeweiligen Design auf ein bestimmtes Belastungsspektrum ausgelegt. Zudem werden die Grenzen der mechanischen Belastbarkeit und Zuverlässigkeit beispielsweise vorab in aufwendigen Tests ermittelt. Insbesondere sicherheitsrelevante Bauteile zum Beispiel in Fahrzeugen (Zügen, Bussen etc), Schiffen oder Flugzeugen, werden während des Betriebs im Rahmen eines Wartungsplans regelmäßig auf ihren Zustand hin untersucht. Dazu dienen je nach Material und Aufbau des zu untersuchenden Bauteils beispielsweise Röntgenuntersuchungen, Ultraschallmessungen oder auch mikroskopische Untersuchungen mittels Elektronen- oder Ionenstrahlverfahren. Ein entscheidender Nachteil dieser Vorgehensweisen besteht aber darin, dass diese nicht "in-situ" (in natürlicher Lage), d. h. kontinuierlich vor Ort angewendet werden können, sondern im Allgemeinen nur im Rahmen von festgelegten Wartungszyklen zum Einsatz kommen. Somit ist bis zur nächsten Untersuchung im Rahmen des Wartungsplans und der Wartungsintervalle des zu untersuchenden mechanischen Bauteils also in der Regel weder bekannt noch ersichtlich, ob das mechanische Bauteil in der Zwischenzeit eine übermäßige mechanische Belastung erfahren hat und möglicherweise bereits mechanische Schäden aufweist. Solche nicht entdeckten, mechanischen Beschädigungen an mechanischen Bauteilen zwischen den Wartungsintervallen können unter Umständen ein hohes Sicherheitsrisiko darstellen.

Neben den oben angegebenen Vorgehensweisen zur Wartung und Untersuchung von mechanischen Bauteilen auf eine mechanische Beschädigung hin sind einige weitere Vorgehensweisen entwickelt worden, die zur Detektion von materialinternen Spannungen dienen. Bekannte technische Verfahren basieren dabei auf einer Verwendung von Fiber-Bragg-Gratings [1] oder der Detektion von Schallwellen [2]. Diese dargestellten Vorgehensweisen sind aber aufgrund von komplizierten und aufwändigen Herstellungsverfahren nur bedingt für die Anwendung in großen Stückzahlen an beispielsweise einer Vielzahl von einzelnen mechanischen Bauteilen einer Baugruppe geeignet. Außerdem verhindern die relativ hohen Kosten dieser Wartungssysteme sowie deren aufwändige Handhabung und Einrichtung durch speziell geschulte Bedienpersonen einen umfassenden praktischen Einsatz.

Die US 6,720,589 betrifft Halbleiterbauelemente, die als optisch aktivierte Speicher oder Einzelphoton-Detektoren konfiguriert werden können. Die Bauelemente umfassen eine aktive Schicht mit einer Mehrzahl von Quantenpunkten und einer aktiven Schicht. Die Bauelemente sind konfiguriert, so dass die in den Quantenpunkten gespeicherte Ladung den Transport und/oder die optischen Charakteristika der aktiven Schicht beeinflusst.

Ausgehend von diesem Stand der Technik besteht somit eine der vorliegenden Erfindung zugrundeliegende Aufgabe darin, einen Informationsspeicher zu schaffen, mittels dem eine Information für eine Zeitspanne gespeichert werden kann, ohne dass der Informationsspeicher während der Zeitspanne Energie für die Speicherung der Information verbraucht. Eine weitere der vorliegenden Erfindung zugrundeliegende Aufgabe besteht darin, dass alte Informationen aus dem Informationsspeicher gelöscht werden können und dass neue Informationen in den Informationsspeicher geschrieben werden können.

Diese Aufgabe wird durch einen Informationsspeicher gemäß Anspruch 1, einen optischen Informationsträger gemäß Anspruch 7, eine Verwendung eines Informationsspeichers gemäß Anspruch 9, eine Vorrichtung zum Speichern von Informationen gemäß Anspruch 10 und ein Verfahren zum Speichern von Informationen gemäß Anspruch 13 gelöst.

Ein Kerngedanke der vorliegenden Erfindung besteht darin, eine Nanopartikelanordnung innerhalb eines Informationsspeichers zu verwenden, wobei die zu speichernde Information mittels eines elektrischen Effekts in der Nanopartikelanordnung gespeichert und mittels eines optischen Effekts ausgelesen werden kann.

Die Nanopartikelanordnung umfasst eine Vielzahl von Nanopartikeln und ein die Nanopartikel umgebendes Stützmaterial. Das Stützmaterial kann z.B. eine Flüssigkeit, ein festes Material oder ein gelförmiges Material sein. Die Nanopartikel sind in dem Stützmaterial verteilt, wobei entweder eine homogene Verteilung oder eine heterogene örtliche Verteilung vorliegen kann.

Das Stützmaterial der Halbleiter-Nanopartikelanordnung kann als ein Verbundwerkstoff bzw. Kompositwerkstoff aus zwei oder mehr verbundenen Materialien vorliegen. Bei Teilchen- und Faserverbundwerkstoffen sind Teilchen bzw. Fasern in eine andere Komponente des Verbundwerkstoffes, der sogenannten Matrix, eingebettet. Als Matrixmaterialien (Matrizen) können dielektrische Materialien, wie zum Beispiel Polymer-, Keramik- oder Glas-Materialien, leitende und halbleitende organische Stoffe, wie zum Beispiel verschiedene Thiophene, BCP (Bathocuproin, 2,9-Dimethyl-4,7-diphenyl-1,10-phenanthrolin), TPD (N,N'-Bis(3-methylphenyl)-N,N'-diphenylbenzidine), CBP (4,4'-Bis(N-carbazolyl)-1,1'-biphenyl), Polyelektrolyte, oder auch Komposite mit leitfahigen Partikeln und Fasern, zum Beispiel TiO₂, ZnO, ITO, Silber, Gold, Graphit, Graphitfasern, CNT, verwendet werden. Das Stützmaterial kann alternativ oder zusätzlich eines der folgenden Materialen in reiner Form, in dotierter Form oder in derivierter Form (als Derivat) umfassen:
Dielektrika, wie PMMA (Polymethylmethacrylat), PS (Polystyrol), PC (Polycarbonat), PVDF (Polyvinylidenfluorid), PA (Polyamid), PP (Polypropylen), PE (Polyethylen), PVC (Polyvinylchlorid), Thermoplaste (PET (Polyethylenterephthalat), Polyetherketone), Duroplaste (Polyester, Formaldehydharze, Epoxidharze, Polyurethane);
leitfähige Materialien, wie Polyelektrolyte, PEDOT (Poly(3,4-ethylenedioxythiophen)-poly(styrenesulfonate)), BCP (Bathocuproin, 2,9-Dimethyl-4,7-diphenyl-1,10-phenanthrolin), TPD (N,N'-Bis(3-methylphenyl)-N,N'-diphenylbenzidine), PPy (Polypyrrol), TCNQ-Komplexe (Tetracyanochinodimethan), PANI (Polyanilin), PVK (Polyvinylcarbazol), Tetracen, Pentacen, Phthalocyanine, Polythiophene, PTCDA (3,4,9,10-Perylentetracarbonsäuredianhydrid), MePTCDI (N,N'-Dimethyl-3,4,9,10- Perylenetetracarbonsäurediimid), Chinacridon, Acridon, Indanthron, Flavanthron, Perinon, Alq3 (Aluminium-tris(8-hydroxychinolin)), P3HT (Poly(3-Hexylthiophen), CNT's (Carbon Nanotubes).

Diese Aufzählung ist als beispielhaft und nicht als abschließend anzusehen.

Bezüglich der vorliegenden Erfindung sollte beachtet werden, dass mit dielektrischen Matrixmaterialien tendenziell längere Speicherzeiten der Ladungsspeicherung in den Halbleiter-Nanopartikeln erreicht werden können, da bei dielektrischen Matrixmaterialien keine energetischen Zustände für einen effektiven Ladungstransport vorhanden sind.

Die optischen Eigenschaften von Nanopartikeln oder -kristallen werden nicht nur von dem verwendeten Material bestimmt, sondern wesentlich auch von der Größe der Nanopartikel. Das für ein Nanopartikel charakteristische Spektrum hängt mit der Wellenfunktion eines im Nanopartikel befindlichen Ladungsträgers zusammen. Bei einer höherenergetischen Anregung z.B. mittels einer externen Anregungseinrichtung in Form einer UV-Lichtquelle oder eines Lasers usw. emittieren Nanopartikel entsprechend ihrer Bandlücke Fluoreszenzstrahlung (sofern sie keine zusätzlichen elektrischen Ladungen enthalten, die zu einer strahlungslosen Rekombination führen). Entsprechend dem Effekt der quantenmechanischen Beschränkung ("quantum confinement effect") kann durch eine Variation der Partikelgröße der Nanopartikel bzw. der Nanokristalle die jeweilige Wellenlänge (d.h. Farbe) der Fluoreszenzemission der Nanopartikelanordnung geändert werden. Halbleiter-Nanopartikel haben nun die Eigenschaft, dass die Energie der ausgesandten Fluoreszenzphotonen, also der Energieabstand vom Grundzustand zu angeregtem Zustand, nicht nur vom jeweiligen Halbleitermaterial der Halbleiter-Nanopartikel, sondern auch von der jeweiligen Partikelgröße der Halbleiter-Nanopartikel abhängt. Somit lassen sich beispielsweise aus demselben Halbleitermaterial unterschiedlich große Partikel herstellen, die in unterschiedlichen Farben fluoreszieren. Die Farbe, d.h. die Emissionswellenlänge lässt sich durch die jeweilige Partikelgröße einstellen. So emittieren kleine Partikel bei einer kleineren Wellenlänge, d.h. bei einer größeren Photonenenergie, während größere Partikel bei größeren Wellenlängen, d.h. bei kleineren Photonenenergien emittieren. Aufgrund der Quantenmechanik ist nun erklärbar, dass durch die räumliche Begrenzung der Abstand der Energieniveaus von den räumlichen Abmessungen, d.h. die Partikelgröße, abhängig ist. Solche Systeme werden auch als Quantenpunkte ("Quantum Dots") bezeichnet.

Ein Quantenpunkt ist eine nanoskopische Materialstruktur, die bei Ausführungsformen der offenbarten technischen Lehre ein Halbleitermaterial in Form von Halbleiter-Nanopartikeln aufweist. Die Ladungsträger (Elektronen oder Löcher) in einem Quantenpunkt sind in ihrer Beweglichkeit in allen drei Raumrichtungen soweit eingeschränkt, dass ihre Energie nicht mehr kontinuierliche Werte, sondern nur diskrete Werte annehmen kann. Typischerweise beträgt die atomare Größenordnung von Quantenpunkten etwa 10² bis 10⁵ Atome.

Somit ist es möglich, mit nur einem Material für die (Halbleiter-)Nanopartikel basierend auf der Größe der Halbleiter-Nanopartikel eine sehr große Bandbreite im Emissionsspektrum der Nanopartikelanordnung einzustellen und zu erzeugen. So können für die Umsetzung der offenbarten technischen Lehre geeignete Halbleitermaterialien für Nanopartikel zum Einsatz kommen, die je nach Größe und Material in einem Wellenlängenbereich, z.B. von 400 nm bis 1700 nm Licht emittieren, wobei der für Menschen sichtbare Spektralbereich von etwa 380 nm bis 780 nm reicht. Dazu zählen beispielsweise Nanopartikel sowohl vom Core-Typ als auch vom Core/Shell-Typ der Halbleiter-Materialien CdSe, CdTe, GaAs, HgTe, InAs, InP, InSb, PbSe, PbS, PbTe, ZnSe, ZnTe, Germanium und Silizium.

Ein erster Betriebszustand des Speicherelements kann durch Anlegen eines elektrischen Felds oder einer elektrischen Spannung an die Nanopartikelanordnung herbeigeführt werden. Angetrieben durch das elektrische Feld bzw. die elektrische Spannung können sich Ladungsträger durch die Nanopartikelanordnung bewegen. Das Stützmaterial kann elektrisch isolierend wirken. Nichtsdestotrotz ist es möglich, dass sich elektrische Ladungsträger beispielsweise aufgrund von Tunneleffekten durch das Stützmaterial bewegen und zumindest ein Teil der durch das elektrische Feld angetriebenen Ladungsträger in eines der Nanopartikel gelangen und dort verbleiben. Durch geeignete Wahl der Stärke und der zeitlichen Dauer des elektrischen Felds kann gewährleistet werden, dass eine statistisch aussagefähige Menge von Ladungsträgern in die Nanopartikel eingelagert werden.

Das Zuführen der elektrischen Ladungsträger zu den Nanopartikeln geschieht auf bereichsweise selektive Weise. Somit können Nanopartikel, die sich in einem ausgewählten Bereich der Nanopartikelanordnung befinden, eine relativ hohe durchschnittliche Ladungsträgermenge empfangen, wohingegen außerhalb des ausgewählten Bereichs befindliche Nanopartikel eine niedrigere durchschnittliche Ladungsträgermenge empfangen. Mit anderen Worten ist der Informationsspeicher ausgebildet, in dem ersten Betriebszustand elektrische Ladungsträger zumindest einigen Nanopartikeln innerhalb einer lokalen Untermenge der Nanopartikel selektiv zuzuführen und diese Nanopartikel elektrisch zu laden. Eine derartige Selektivität kann zum Beispiel durch eine entsprechende räumliche Formgebung des elektrischen Felds erreicht werden. Sofern sich das elektrische Feld im Wesentlichen örtlich begrenzt ausbreitet, kann der ausgewählte Bereich relativ exakt definiert werden. Beispielsweise können Elektroden, mit denen das elektrische Feld erzeugt wird, die Gestalt eines Plattenkondensators aufweisen, in welchem die elektrischen Feldlinien im wesentlichen parallel verlaufen. Somit ist das zwischen den Platten des Plattenkondensators erzeugte Feld wesentlich stärker, als das außerhalb der Platten erzeugte Feld, sodass das elektrische Feld im Wesentlichen nur zwischen den Platten stark genug ist, die Zuführung der Ladungsträger zu den Nanopartikeln zu bewirken. Die Grenze zwischen dem ausgewählten Bereich und dem nicht ausgewählten Bereich kann einen Übergangsbereich aufweisen, in dem die in den Nanopartikeln enthaltenen Ladungsträgermengen allmählich abnimmt bzw. zunimmt. Der ausgewählte Bereich kann mehrere Unterbereiche umfassen, die gegebenenfalls auch disjunkt voneinander sein können. Des Weiteren kann der selektierte Bereich auch das gesamte Speicherelement bzw. die gesamte Nanopartikelanordnung erfassen.

Zumindest nach anwendungsbezogenen und praktischen Kriterien ist der Informationsspeicher im Wesentlichen geeignet, raumkontinierliche Daten zu speichern, da die Nanopartikel so dicht angeordnet sein können, dass es zu keiner normalerweise erkennbaren räumlichen Diskretisierung kommt. Die einzelnen Nanopartikel bilden zwar diskrete Strukturen; diese sind jedoch in der Regel so klein und so eng gepackt, dass sich die einzelnen Nanopartikel erst mit z.B. Elektronenmikroskopen erkennen lassen. Dabei sind die gespeicherten Werte in den einzelnen Nanopartikeln binär, d. h. man kann bei dem jeweiligen Partikel nur zwischen "an" und "aus" unterscheiden. Mittels einer statistischen Verteilung über mehrere Partikel lassen sich jedoch auch kontinuierliche Werte speichern und anzeigen.

In einem zweiten Betriebszustand des Speicherelements wird weitgehend verhindert, dass die zugeführten Ladungsträger aus den Nanopartikeln abfließen. Die den Nanopartikeln zuvor (während des ersten Betriebszustands) zugeführten Ladungsträger werden zu einem signifikanten Anteil in den Nanopartikeln dauerhaft gehalten, so dass eine nach einer Zeitspanne vorhandene Ladungsträgermenge in einem Toleranzbereich einer ursprünglich zugeführten Ladungsträgermenge liegt. Der zweite Betriebszustand kann relativ lange dauern und die Nanopartikelanordnung benötigt typischerweise keine von außen zugeführte Energie, um den zweiten Betriebszustand aufrecht zu halten. Als mögliche Zeitspannen, während der die Nanopartikelanordnung den Abfluss der Ladungsträger soweit verhindern kann, dass die gespeicherten Informationen noch zuverlässig ausgelesen werden können, sind Zeitspannen von einigen Minuten, Stunden, Tagen, Wochen, Monaten oder sogar Jahre möglich. Das Abfließen der Ladungsträger aus den Nanopartikeln ist typischerweise ein statistischer Effekt, der entfernt ähnlich ist mit dem Zerfall radioaktiver Elemente. Dementsprechend kann für eine bestimmte Nanopartikelanordnung beispielsweise eine Halbwertszeit oder eine andere brauchbare Größe angegeben werden. Zum Beispiel kann in einigen Anwendungsfällen eine zuverlässige Auslesbarkeit des Speicherelements gegeben sein, solange noch mindestens 90% der ursprünglich zugeführten Ladungsträger in der Nanopartikelanordnung vorhanden sind, was als Maß für die durchschnittlich erreichbare Speicherzeit herangezogen werden kann.

Eine Änderung der Fluoreszenzeigenschaften der Nanopartikel durch die zugeführten Ladungsträger kann zum Beispiel darin bestehen, dass eine normalerweise zu beobachtende strahlende Rekombination bei optischer Anregung unterdrückt wird. Somit lassen sich Bereiche, in denen Ladungsträger zu den Nanopartikeln zugeführt wurden, dadurch erkennen, dass diese bei optischer Anregung vergleichsweise dunkler leuchten oder gar nicht leuchten.

Das erfindungsgemäße Konzept ist ferner auf eine Sensoranordnung anwendbar, die zur Anzeige und Speicherung einer auf ein mechanisches Bauelement einwirkenden Belastung, zum Beispiel in Form einer Zug-, Druck-, Stoß- oder Biegebelastung, mittels eines kraftsensitiven Elements und eines damit elektrisch gekoppelten Anzeigeelements vorgesehen ist.

Das kraftsensitive Element ist z.B. kraft-, form- oder stoffschlüssig an das zu überwachende mechanische Bauelement angekoppelt und erzeugt als Ergebnis einer statischen oder dynamischen, mechanischen Belastung des mechanischen Bauelements, d. h. bei Einwirken einer mechanischen Kraft, eine elektrische Spannung bzw. eine elektrische Ladungsmenge, die von außen abgreifbar ist. Darüber hinaus weist das mit dem kraftsensitiven Element elektrisch verbundene Anzeigeelement eine Halbleiter-Nanokristallanordnung auf, wobei eine Fluoreszenzeigenschaft der Halbleiter-Nanokristallanordnung des Anzeigeelements basierend auf der zumindest teilweise zugeführten, elektrischen Ladungsmenge (einer Ladungsträgerpolarität) des kraftsensitiven Elements änderbar bzw. einstellbar ist.

Das kraftsensitive Element kann nun ausgebildet sein, um erst bei Überschreiten eines Grenzwerts für die mechanische Belastung die elektrische Ladungsmenge Qo basierend auf der einwirkenden mechanischen Belastung bereitzustellen. Alternativ kann das kraftsensitive Element ausgebildet sein, um die elektrische Ladungsmenge Q₀ kontinuierlich basierend auf und z. B. proportional zu der einwirkenden mechanischen Belastung bereitzustellen. Die von dem kraftsensitiven Element bereitgestellte Ladungsmenge Q₀ kann nun einerseits angeben, dass ein Grenzwert für die mechanische Belastbarkeit des mechanischen Bauteils bereits überschritten ist. Alternativ kann die von dem kraftsensitiven Element bereitgestellte Ladungsmenge Q₀ kontinuierlich und z. B. proportional zur einwirkenden mechanischen Belastung erzeugt werden, um beispielsweise über eine vorgegebene Zeitdauer die insgesamt auf das mechanische Bauteil ausgeübte mechanische Belastung (kumulativ) darzustellen. Beide Alternativen sind dabei auf statisch und dynamisch auftretende Belastungen anwendbar.

Das kraftsensitive Element und das Anzeigeelement mit der Halbleiter-Nanokristallanordnung können nun so ausgebildet sein, dass sich eine Änderung der Fluoreszenzeigenschaft des Anzeigeelements basierend auf der von dem kraftsensitiven Element erfassten mechanischen Belastung, die auf das mechanische Bauelement einwirkt, ergibt. Wird nun die Fluoreszenzeigenschaft des Anzeigeelements zum Beispiel durch eine externe optische Anregung aktiviert, kann letztendlich aus der von dem Anzeigeelement emittierten Strahlung aufgrund der jeweils vorliegenden Fluoreszenzeigenschaft der Halbleiter-Nanokristallanordnung auf die bisher auf das mechanische Bauelement einwirkende mechanische Belastung geschlossen werden. Da nun insbesondere die von dem kraftsensitiven Element bereitgestellte Ladungsmenge zumindest teilweise eine gewisse Dauer, z. B. im Bereich von Tagen, Monaten oder sogar Jahren, in den Nanokristallen der Halbleiter-Nanokristallanordnung des Anzeigeelements gespeichert werden kann, lässt sich eine auf das mechanische Bauelement einwirkende mechanische Belastung und damit der jeweilige Belastungszustand des mechanischen Bauelements entsprechend der Dauer der Ladungsspeicherung in den Nanokristallen bzw. bis zu einem aktiven Reset-Vorgang des Speicherzustands speichern und damit anzuzeigen.

Da die von dem kraftsensitiven Element bereitgestellte Ladungsmenge Q₀ auf einem Uberschreiten eines Soll- oder Grenzwerts für die mechanische Belastung basiert oder alternativ kontinuierlich die einwirkende mechanische Belastung darstellt, wird von dem Anzeigeelement dementsprechend entweder das Überschreiten eines Grenzwerts für die mechanische Belastung oder alternativ eine kumulierende Darstellung der einwirkenden mechanischen Belastungszustände angezeigt.

Da die Bestandteile der erfindungsgemäßen Sensoranordnung, d. h. das kraftsensitive Element und das Anzeigeelement, jeweils schichtförmig aufgebaut sein können, kann die resultierende Sensoranordnung wiederum als ein Schichtstapel implementiert werden. Dieser Schichtstapel aus dem kraftsensitiven Element und dem Anzeigeelement mit der Halbleiter-Nanokristallanordnung kann nun direkt auf das zu überwachende, mechanische Bauteil aufgebracht werden, wobei die Positionen für die Sensoranordnung insbesondere in dem Bereich mit einer hohen Aussagekraft bezüglich mechanische Belastungen, zum Beispiel an Biegelinien oder bevorzugten Verformungsbereichen, liegen. Die erfindungsgemäße Sensoranordnung kann somit zum Beispiel bei Verbundwerkstoffen in Form einer Folie an das mechanische Bauteil laminiert werden oder kann auch beispielsweise bei Spritzgussteilen mittels eines Hinterspritzvorgangs in das mechanische Bauteil selbst eingebettet werden. Bei dieser Anordnung ist lediglich zu beachten, dass die Fluoreszenzeigenschaft des Anzeigeelements weiterhin von außen beispielsweise durch eine optische Anlegung aktivierbar und auch erkennbar bleibt.

Erfindungsgemäß wird somit eine materialintegrierte Sensorik zur Detektion der mechanischen Belastung auf ein mechanisches Bauteil vom Eintreffen des mechanischen Belastungsereignisses über die Speicherung bis hin zur Auswertung (Visualisierung) dieses Belastungszustands realisiert. Es wird somit ermöglicht, mechanische Belastungszustände, wie zum Beispiel Zug-, Druck-, Schlag-, Stoß- oder Biegungsbelastungen usw. direkt am oder im Material des zu überwachenden mechanischen Bauteils zu erfassen, dort zu speichern und am Bauteil selbst sichtbar zu machen bzw. auswerten zu können. Somit können betroffene Bauteile, die beispielsweise eine mechanische Sollbelastung bereits überschritten haben, gegebenenfalls rechtzeitig erkannt und ausgetauscht und somit die statische Zuverlässigkeit ganzer Baugruppen effektiv gewährleistet werden.

In diesem Zusammenhang wird darauf hingewiesen, dass das erfindungsgemäße Konzept bzw. die erfindungsgemäße Vorgehensweise universell bei verschiedensten Bauelementen oder Bauteilen eingesetzt werden kann und somit nicht auf bestimmte Materialklassen oder Bauteildesigns beschränkt ist.

Ausführungsbeispiele der vorliegenden Erfindung werden nachfolgend unter Bezugnahme auf die beiliegenden Zeichnungen näher erläutert. Es zeigen:
- Fig. 1A: eine Prinzipdarstellung eines ersten Wirkmechanismus;
- Fig. 1B: ein zu dem Wirkmechanismus von Fig. 1A gehörendes Energieniveauschema mit Elektronen als Ladungsträgern;
- Fig. 1C: ein zu dem Wirkmechanismus von Fig. 1A gehörendes Energieniveauschema mit Löchern als Ladungsträgern;
- Fig. 2A: eine Prinzipdarstellung eines erweiterten Ausführungsbeispiels;
- Fig. 2B: ein zu dem erweiterten Ausführungsbeispiel von Fig. 2A gehörendes Energieniveauschema;
- Fig. 3A: eine Prinzipdarstellung eines Ausführungsbeispiels, das im Wesentlichen komplementär ist zu dem Ausführungsbeispiel von Fig. 2A;
- Fig. 3B: ein zu dem Ausführungsbeispiel von Fig. 3A gehörendes Energieniveauschema;
- Fig. 4: einen schematischen Querschnitt durch einen Informationsspeicher gemäß der hierin offenbarten Lehre in den drei Zuständen "Schreiben", "Speichern" und "Auslesen";
- Fig. 5: eine schematische, perspektivische Ansicht eines Informationsspeichers gemäß der hierin offenbarten Lehre;
- Fig. 6: eine Prinzipdarstellung einer erfindungsgemäßen Sensoranordnung gemäß eines Ausführungsbeispiels der vorliegenden Erfindung;
- Fig. 7A -: B eine Prinzipdarstellung einer Sensoranordnung mit einem zugehörigen Energieschema gemäß eines weiteren Ausführungsbeispiels der vorliegenden Erfindung;
- Fig. 8A - B: eine Prinzipdarstellung einer Sensoranordnung mit einem zugehörigen Energieniveauschema gemäß eines weiteren Ausführungsbeispiels der vorliegenden Erfindung;
- Fig. 9A -: B eine Prinzipdarstellung einer Sensoranordnung mit einem zugehörigen Energieniveauschema gemäß eines weiteren Ausführungsbeispiels der vorliegenden Erfindung; und
- Fig. 10: ein prinzipielles Ablaufdiagramm eines Verfahrens gemäß eines weiteren Ausführungsbeispiels der vorliegenden Erfindung.

Bevor nachfolgend die offenbarte technische Lehre im Detail anhand der Zeichnungen näher erläutert wird, wird darauf hingewiesen, dass identische, funktionsgleiche oder gleichwirkende Elemente in den Figuren mit den gleichen bzw. ähnlichen Bezugszeichen versehen sind, so dass die in unterschiedlichen Ausführungsbeispielen dargestellte Beschreibung der Elemente untereinander austauschbar ist bzw. aufeinander angewendet werden kann.

Die offenbarte technische Lehre beschreibt eine Vorrichtung zum permanenten Speichern von optischen Informationen (optischer Informationsspeicher). Während der Herstellung der Vorrichtung muss die zu speichernde optische Information noch nicht spezifiziert sein. Ein Bestandteil der offenbarten Vorrichtung ist eine Schicht oder ein Bereich aus Nanopartikeln z.B. Quantenpunkte ("Quantum Dots"), deren Photolumineszenzen lokal geändert werden können. Diese lokale Änderung kann durch ein oder mehrere strukturierte oder unstrukturierte leitfähige Elektroden hervorgerufen werden, welche die Anordnung begrenzen. Die lokale Änderung der Eigenschaften innerhalb der Vorrichtung ermöglicht es, Zeichen, Zahlen, Buchstaben oder Bilder darzustellen. Diese Informationen können vom Nutzer oder einer anderen Person anschließend sehr einfach z.B. durch das Beleuchten mit einer geeigneten Lichtquelle (z.B. UV-Lichtquelle) sichtbar gemacht werden.

Die Änderung der Photolumineszenz kann im Wesentlichen durch einen Wirkmechanismus und darauf beruhende Anordnungen hervorgerufen werden. Dieser Mechanismus wird durch das lokale Einbringen von zusätzlichen Ladungsträgern hervorgerufen. Technische Grundlage dieser Erfindung ist die Eigenschaft dieser Nanopartikel, bei energiereicherer optischer Anregung Licht in einer für die Größe und Materialzusammensetzung charakteristischen Wellenlänge auszusenden. Durch die äußere Anregung werden im Nanopartikel Elektronen-Loch-Paare, sogenannte Excitonen, erzeugt, welche anschließend rekombinieren und ein Fluoreszenzphoton aussenden. Werden durch geeignete Methoden zusätzliche Ladungsträger in diese Nanopartikel eingebracht und bleiben dort gespeichert, so rekombinieren die Elektronen-Loch-Paare nicht mehr unter Aussendung eines Fluoreszenzphotons, sondern geben ihre Energie an diese zusätzliche Ladung ab, analog zur Auger-Ionisierung (D.I. Chepic, A.L. Efros, A.I. Ekimov, M.G. Ivanov, V.A. Kharchenko, I.A. Kudriavtsev und T.V. Yazeva: "Auger ionization of semiconductor quantum dots in a glass matrix", J. Lumin. 47, 113 (1990)). Die Speicherzeit von Ladungsträgern in Quantum Dots kann je nach Auslegung der Anordnung (Energiebarriere) sogar mehrere Jahre betragen (M. Geller, A. Marent, T. Nowozin, D. Feise, K. Pötschke, N. Akçay, N. Öncan und D. Bimberg: "Towards an universal memory based on self-organized quantum dots", Physica E, Volume 40, Issue 6, S. 1811-1814).

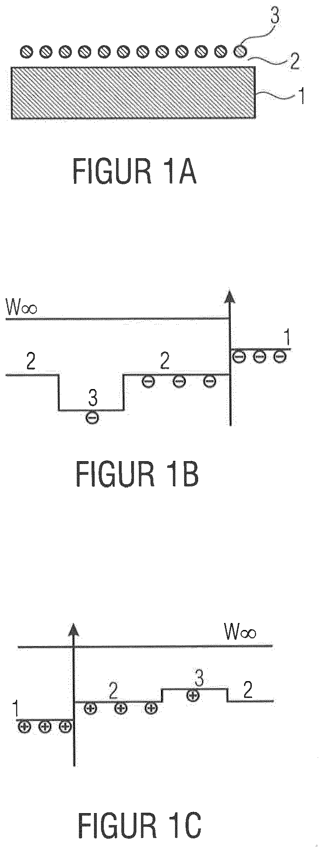

Fig. 1A zeigt eine Prinzipdarstellung eines Informationsspeichers in einfacher Form, der gemäß dem Wirkmechanismus funktioniert. Der Informationsspeicher umfasst eine Elektrode 1, eine ladungsträgerleitende Schicht 2, und eine Nanopartikelschicht 3. Die Elektrode 1 stellt Ladungsträger (Elektronen oder Löcher) zur Verfügung. Die Ladungsträger werden mittels der ladungsträgerleitenden Schicht 2 zu Nanopartikeln geleitet, die in der Nanopartikelschicht 3 enthalten sind. Die ladungsträgerleitende Schicht kann ein vorwiegend löcherleitendes Material oder ein vorwiegend elektronenleitendes Material sein. Die Ladungsträger verbleiben in den Nanopartikeln, wenn es sich um den für die Nanopartikel energetisch günstigsten Zustand handelt.

In Fig. 1B ist ein vereinfachtes Energieniveauschema mit Elektronen als Ladungsträgern dargestellt. Zur Orientierung ist der Energiewert W_{∞} (Vakuumniveau) in dem Energieniveauschema angegeben. Innerhalb der Elektrode 1 ist das Energieniveau der Elektronen relativ hoch. In der ladungsträgerleitenden Schicht 2 ist das Energieniveau der Elektronen etwas niedriger. Ein lokales Minimum des Energieniveaus wird innerhalb der Nanopartikel in der Nanopartikelschicht 3 erreicht. Fig. 1B zeigt das Energieniveauschema, wenn die Anordnung mit einer elektrischen Spannung beaufschlagt ist.

Entsprechend der hier angenommenen Polarisation der Elektrode 1 sammeln sich die Elektronen zunächst an dieser Elektrode 1. Besitzt nun das Elektrodenmaterial eine geringere Austrittsarbeit im Vergleich zur Leitungsbandkante der Halbleiter-Nanopartikel, so ist es für die negativen Ladungen (Elektronen) energetisch günstiger, entsprechende Zustände im Leitungsband E_{c} der Halbleiter-Nanopartikel zu besetzen. Dieser Vorgang ist in dem in Fig. 1B dargestellten prinzipiellen Energieniveauschema dargestellt. Die Elektronen fließen daher über Diffusions- bzw. Tunnelprozesse in Richtung der Halbleiter-Nanopartikel ab und werden in diesen "gespeichert".

Wie im Vorhergehenden beschrieben wurde, bewirken diese in den Halbleiter-Nanopartikeln gespeicherten "delokalisierten" Ladungen eine Beeinflussung bzw. ein "Ausschalten" der Fluoreszenzeigenschaft der nunmehr ionisierten Halbleiter-Nanopartikel und damit eine lokale Verringerung der Intensität (d.h. der Helligkeit) der emittierten Fluoreszenzstrahlung. Damit ist das ursprüngliche äußere elektrische Feld 7, welches die zu speichernden Informationen repräsentiert, lokal als eine verminderte Fluoreszenzeigenschaft der Nanopartikelanordnung optisch detektierbar.

Fig. 1C zeigt ein zu Fig. 1B äquivalentes Energieniveauschema, wobei jedoch Löcher als Ladungsträger dienen. Innerhalb der Elektrode 1 ist das Energieniveau der Löcher relativ niedrig dargestellt. Man beachte jedoch, dass sich bei Löchern das Vorzeichen umkehrt, so dass die tatsächliche Energie der Löcher innerhalb der Elektrode 1 relativ hoch ist. Im ladungsträgerleitenden Material 2 haben die Löcher ein mittleres Energieniveau und in den Nanopartikeln wird ein lokaler Extremwert erreicht.

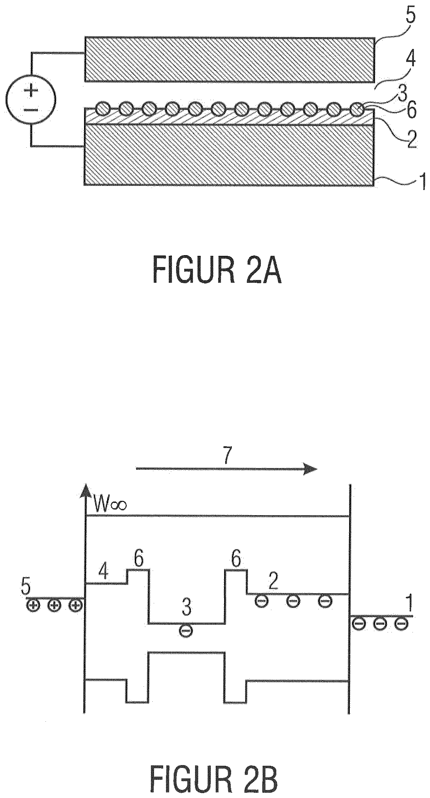

Fig. 2A zeigt ein erweitertes Ausführungsbeispiel des Wirkmechanismus mit Elektronen als in den Nanopartikeln zu speichernde Ladungsträger. Die Struktur umfasst in diesem Fall zwei parallele Elektroden 1 und 5. Zwischen den Elektroden 1 und 5 ist ein Matrixmaterial 2, 4 angeordnet, das aus einer oder mehreren funktionalen Schichten bestehen kann, wobei mindestens ein Teil des Matrixmaterials 2, 4 optisch transparent auszuführen ist. Die zur Speicherung in den Nanopartikeln vorgesehenen Elektronen werden von der Elektrode 1 mit negativem elektrischen Potential zur Verfügung gestellt. Auf der anderen Elektrode 5 befinden sich auf Grund eines positiven elektrischen Potentials Löcher. Das resultierende elektrische Feld 7 ermöglicht eine gerichtete Bewegung der Ladungsträger. Die geeignete Wahl des Matrixmaterials 2 zwischen negativer Elektrode 1 und Nanopartikelschicht 3 ermöglicht den Transport von Elektronen zu den Nanopartikeln, während aufgrund der isolierenden Wirkung des Matrixmaterials 4 zwischen positiver Elektrode und Nanopartikelschicht die Löcher von den Nanopartikeln ferngehalten werden. Dabei muss es sich bei dem Matrixmaterial 4 nicht unbedingt um einen Isolator handeln. Durch die geeignete Wahl der Energieniveaus bzw. Leitfähigkeiten von Matrixmaterial 2, 4 kann dieser Effekt auch erzeugt werden. Die Nanopartikel in Schicht 3 können ebenfalls in ein Matrixmaterial 6 eingebettet sein. Ist dieses Material so dimensioniert, dass es Elektronen transportiert, entgegengesetzt geladene Löcher jedoch abhält, kann auch das Matrixmaterial in Schicht 3 die selektive Ladungsträgerspeicherung sicherstellen.

Fig. 2B zeigt das Energieniveauschema zu der in Fig. 2A dargestellten Prinzipdarstellung. Die Nanopartikel sind in diesem Beispiel in ein stabilisierendes energetisch angepasstes Material eingebettet 6. Um aus dem Nanopartikel auszutreten, müssen die Elektronen einen "Energiewall" überwinden, der die Höhe der Differenz der Energieniveaus zwischen dem Inneren des Nanopartikels 3 und der Matrix 6 hat.

Die visualisierte Information wird wieder abgeschaltet und das Display wird gelöscht, indem die ursprünglich vorhandenen Fluoreszenzeigenschaften der Nanopartikel wieder hergestellt werden. Das kann beispielsweise mittels einer Bestrahlung mit intensivem, kurzwelligen UV-Licht oder auch durch Anlegen eines starken elektrischen Feldes geschehen.

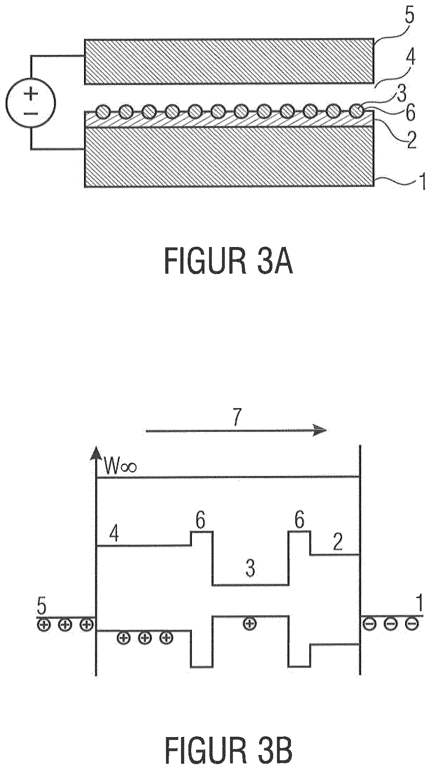

Fig. 3A zeigt eine komplementäre Prinzipdarstellung im Vergleich zu der in Fig. 2A abgebildeten Prinzipdarstellung. Bei der Prinzipdarstellung von Fig. 3A dienen Löcher als in den Nanopartikeln zu speichernde Ladungsträger. In der Darstellung ist die elektrische Spannung so gepolt, dass es sich um ein Speichern der Löcher und damit ein Unterdrücken der Photolumineszenz handelt. In diesem Ausführungsbeispiel sind die Matrixmaterialien 2, 4 so zu wählen, dass der Transport von Löchern zu den Nanopartikeln durch das Matrixmaterial 2, 4 gewährleistet ist, die komplementären Elektronen jedoch durch das Matrixmaterial 2, 4 von den Nanopartikeln ferngehalten werden.

Analog der Prinzipdarstellung von Fig. 2A kann die darzustellende Information wieder gelöscht werden, indem die Nanopartikelschicht mit intensivem, kurzwelligem UV-Licht bestrahlt wird, oder indem ein starkes elektrisches Feld angelegt wird.

In Fig. 3B ist das Energieniveauschema dargestellt, das zu der Prinzipdarstellung von Fig. 3A gehört. Entsprechend der hier angenommenen Polarität sammeln sich die Löcher zunächst an der oberen Elektrode 5, während sich die negativen Ladungen an der unteren Elektrode 1 ansammeln. Besitzt das Elektrodenmaterial, wie in Fig. 3B gezeigt, eine geringere Austrittsarbeit im Vergleich zur Valenzbandkante der Halbleiter-Nanopartikel, so ist es für die positiven Ladungen energetisch günstiger, entsprechende Zustände im Valenzband Ev der Halbleiter-Nanopartikel zu besetzen, wie dies prinzipiell in dem Energieniveauschema von Fig. 3B dargestellt ist. Die positiven Ladungen fließen daher über Diffusions- und Tunnelprozesse in Richtung der Halbleiter-Nanopartikel ab und werden in diesen gespeichert. Wie bereits im Vorherigen beschrieben wurde, bewirken diese Ladungen eine Veränderung bzw. ein Ausschalten der Fluoreszenzeigenschaft der ionisierten Halbleiter-Nanopartikel. Damit ist das ursprüngliche, äußere elektrische Feld, welches die zu speichernde Information repräsentiert, lokal als eine verminderte Fluoreszenz der Halbleiter-Nanopartikelanordnung des Informationsspeichers optisch detektierbar. Aufgrund der Speicherwirkung der Nanopartikel ist die zu speichernde Information auch noch eine Zeitdauer (von bis zu mehreren Jahren) nach dem Schreiben der Information nachweisbar.

Die hierin vorgestellte technische Lehre ermöglicht es, Schilder, Displays u.a. herzustellen, mit denen Informationen mit Hilfe eines einmaligen Schreibvorgangs permanent gespeichert und bei entsprechender Anregung dargestellt werden können. Für den weiteren Verlauf ist keine permanente elektrische Energie mehr nötig. Die gespeicherte Information kann durch eine einfache äußere optische Anregung mit einer höherenergetischen UV-Lampe sichtbar gemacht werden.

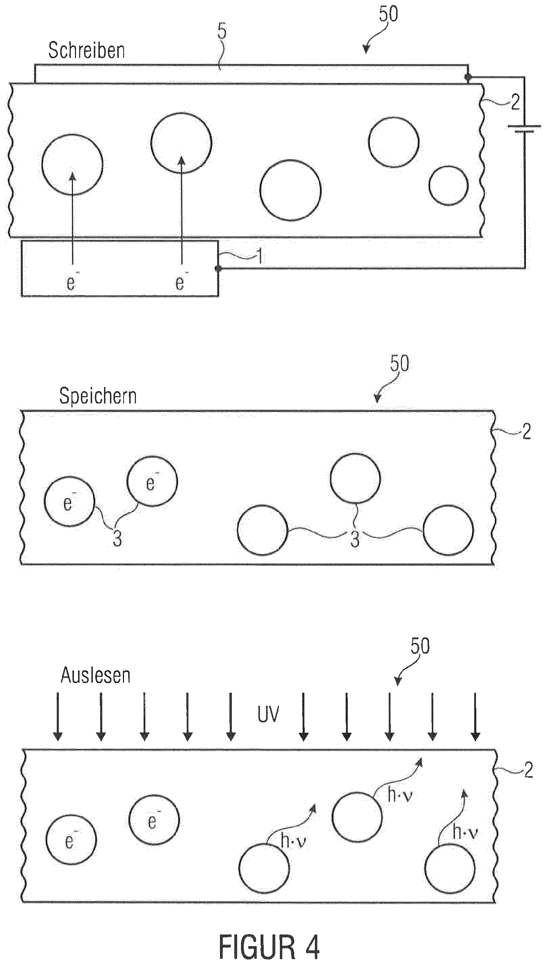

Fig. 4 veranschaulicht das Funktionsprinzip des offenbarten Informationsspeichers. Fig. 4 zeigt eine Nanopartikelanordnung 50 eines Speicherelements des Informationsspeichers in drei verschiedenen Zuständen, die während der Benutzung des Informationsspeichers auftreten können. Die Nanopartikelanordnung umfasst eine Vielzahl von Nanopartikeln oder - kristallen 3 und ein Stützmaterial 2. Die obere Abbildung in Fig. 4 zeigt einen Schreibzustand des Informationsspeichers. Eine erste Elektrode 1 kontaktiert einen Bereich des Stützmaterials 2, nämlich den linken Bereich. Ein anderer Bereich (der rechte Bereich) des Stützmaterials 2 wird nicht direkt von der Elektrode 1 kontaktiert. Eine zweite Elektrode 5 ist auf der gegenüberliegenden Seite des Stützmaterials angeordnet und kontaktiert im Wesentlichen die gesamte Fläche des Stützmaterials 2. Zwischen den Elektroden 1, 5 ist eine elektrische Spannung angelegt, die bewirkt, dass sich Elektronen e⁻ von der ersten Elektrode 1 durch das Stützmaterial 2 in Richtung der zweiten Elektrode 5 bewegen. Die Elektronenbewegung (oder allgemeiner: Ladungsträgerbewegung) findet im Wesentlichen in dem von der ersten Elektrode 1 kontaktierten Bereich und dessen Verlängerung senkrecht zu einer Oberfläche des Stützmaterials 2 statt und beruht im Wesentlichen auf Tunnel- und/oder Diffusionseffekten. Nanopartikel 3, die sich in diesem Bereich und dessen Verlängerung befinden, haben eine erhöhte Wahrscheinlichkeit, Ladungsträger zu fangen und zu absorbieren, die auf dem Weg von der ersten Elektrode 1 zur zweiten Elektrode 5 sind. Diese Nanopartikel sind in der Folge negativ elektrisch geladen.

Es ist möglich, dass ein oder mehrere weitere Schreibvorgänge durchgeführt werden, mit denen weitere Informationen zu den bereits gespeicherten Informationen hinzugefügt werden können. Die bereits gespeicherten Informationen und die weiteren Informationen bilden dann eine Gesamtinformation. Der weitere Schreibvorgang kann zu einem unterschiedlichen Zeitpunkt als der erste Schreibvorgang durchgeführt werden. Die beiden Schreibvorgänge können zeitlich auseinander liegen, z.B. einige Stunden, Tage, Wochen, Monate oder sogar Jahre. Im Rahmen des weiteren Schreibvorgangs wird ein zweites bereichsweise selektives elektrisches Feld erzeugt, mit dem die weiteren Informationen in der Nanopartikelanordnung gespeichert werden können. Diese weitere Beschreibbarkeit kann zum Beispiel dazu verwendet werden, den Zustand und/oder die Vorgeschichte eines Gegenstands oder einer gespeicherten Information festzuhalten und bei Bedarf wiederzugeben.

Die mittlere Abbildung in Fig. 4 zeigt einen Speicherzustand des Informationsspeichers. Abgesehen von üblichen Umwelteinflüssen wirkt keine signifikante Energie von außen auf die Nanopartikelanordnung 50 ein. Die negativ geladenen Nanopartikel 3 befinden sich hauptsächlich in einem Bereich, der während des Schreibvorgangs durch die Elektrode 1 definiert wurde, und behalten ihre negative elektrische Ladung, d.h. überschüssige Elektronen e⁻, da für die Elektronen der energetisch günstigste Aufenthaltsort innerhalb der Nanopartikel ist. Der Speicherzustand kann eine hohe Lebensdauer haben, die bis zu mehreren Jahren betragen kann.

Die untere Abbildung in Fig. 4 zeigt einen Auslesezustand des Informationsspeichers. Durch Bestrahlung mit ultraviolettem Licht (UV-Licht) werden Nanopartikel 3 mittels Photolumineszenz zum Leuchten gebracht, die keine zugeführten Ladungsträger beinhalten, also außerhalb des während des Schreibvorgangs durch die Elektrode 1 definierten Bereichs liegen. Innerhalb des von der Elektrode 1 definierten Bereichs wird eine Photolumineszenz der Nanopartikel 3 jedoch weitgehend unterdrückt. Damit einerseits das UV-Licht zu den Nanopartikeln gelangen kann und andererseits eine von den Nanopartikeln 3 ohne zugeführte Ladungsträger erzeugte Photolumineszenz durch das Stützmaterial 2 hindurch treten kann, ist das Stützmaterial 2 zumindest teilweise transparent für das verwendete UV-Licht und die von den Nanopartikeln abgestrahlte Photolumineszenzwellenlänge. Da bei der Bestrahlung mit dem UV-Licht der Bereich oder die Bereiche im Wesentlichen dunkel bleiben, in denen vorwiegende elektrisch geladene Nanopartikel vorliegen, kann die während des Schreibvorgangs in die Nanopartikelanordnung 50 eingebrachte Information wieder sichtbar gemacht werden.

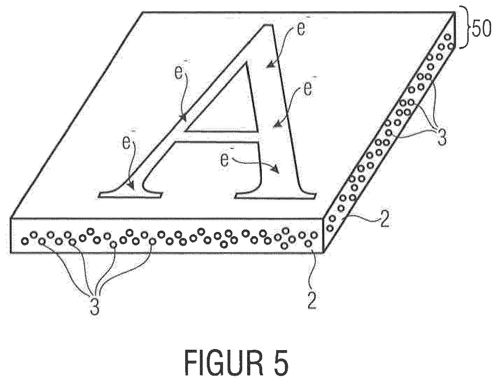

Fig. 5 ist eine schematische, perspektivische Ansicht eines Informationsspeichers gemäß der offenbarten technischen Lehre. Der Informationsspeicher umfasst im Wesentlichen das Speicherelement, welches seinerseits im Wesentlichen die Nanopartikelanordnung 50 umfasst. Zwecks Klarheit der Darstellung ist im Wesentlichen nur die Nanopartikelanordnung 50 dargestellt, welche das Stützmaterial 2 und die Nanopartikel 3 umfasst. An einer Oberfläche der Nanopartikelanordnung 50 ist ein Bereich dargestellt, der der zu speichernden Information (hier als Beispiel der Buchstabe "A") entspricht. Elektronen e⁻ werden als Ladungsträger über die Oberfläche der Nanopartikelanordnung 50 innerhalb des Bereichs "A" in die Nanopartikelanordnung 50 eingebracht und bewegen sich im Wesentlichen senkrecht zu der Oberfläche durch die Nanopartikelanordnung bis sie (zumindest teilweise) den in diesem Bereich vorhandenen Nanopartikeln 3 zugeführt werden.

Da nun darüber hinaus Halbleiter-Nanopartikel unterschiedlicher Größe eine farblich unterschiedliche Fluoreszenzemission aufweisen, kann bei Zuführung einer Ladungsträgermenge Qo von den Elektroden 1 bzw. 5 aufgrund des unterschiedlichen Ansprechens verschieden großer Halbleiter-Nanopartikel eine entsprechende Farbveränderung bei der Fluoreszenzemission und damit ein farblicher Kontrast erhalten werden. Dabei können die Nanokristalle unterschiedlicher Größe als Gemisch in einer einzigen Schicht vorliegen. Oder die Kristalle unterschiedlicher Größe liegen räumlich getrennt in mehreren Schichten bzw. Bereichen vor.

Zum Beispiel umfasst die Nanopartikelanordnung eine erste Schicht, in der hauptsächlich Nanopartikel einer ersten Größe vorhanden sind. Weiterhin umfasst die Nanopartikelanordnung eine zweite Schicht, in der hauptsächlich Nanopartikel einer zweiten Größe vorhanden sind, und sie umfasst eine dritte Schicht, in der Nanopartikel einer dritten Größenordnung vorhanden sind. Die Nanopartikel der ersten Schicht sind dabei kleiner als die Nanopartikel der zweiten Schicht und die Partikel der dritten Schicht haben jeweils eine andere Größe als die Nanopartikel der ersten und zweiten Schicht.

Fügt man nun selektiv nur den Nanopartikeln einer bestimmten Größe Ladungen zu, was durch räumliche Trennung unterschiedlicher Partikel oder energetische Auswahl der zugeführten Ladungsträger geschehen kann, so wird der Photolumineszenzeffekt nur für eine bestimmte Größe der Nanokristalle, d.h. für eine bestimmte Farbe unterdrückt. Da bei einer optischen Anregung während des Auslesevorgangs die Partikel anderer Größen ungehindert fluoreszieren, wird die gespeicherte Information als Farbveränderung bzw. farblicher Kontrast sichtbar.

Vorrichtungen zum Beschreiben eines Informationsspeichers können neben Elektroden zum Speichern ferner auch Löschelektroden umfassen. Um ein rasches und einfaches Löschen zu ermöglichen, können die Löschelektroden flächig ausgebildet sein. Alternativ kann zumindest eine der Löschelektroden auch stabförmig ausgebildet sein, so dass zum Löschen die stabförmige Elektrode über den Informationsspeicher bewegt wird, um darin ein löschendes elektrisches Feld zu erzeugen, mit dem sämtliche Bereiche der Nanopartikelanordnung des Informationsspeichers gelöscht werden. Die ohnehin meistens flächig ausgebildete Elektrode 5 kann als eine der Löschelektroden verwendet werden.

Bezüglich des erfindungsgemäßen Informationsspeichers sollte beachtet werden, dass ein Auslesen des Speicherelements des Informationsspeichers keinen "Reset"-Vorgang hinsichtlich der in der Halbleiter-Nanopartikelanordnung gespeicherten Ladungsträger darstellt, da die Ladungsträger auch nach einem Auslesen des Speicherelements (zumindest größtenteils) in der Halbleiter-Nanopartikelanordnung gespeichert bleiben. Ein Rücksetzen des Informationsspeichers kann beispielsweise dadurch erfolgen, dass ein entsprechend ausgerichtetes und ausreichend starkes elektrisches Feld an die Halbleiter-Nanopartikelanordnung angelegt wird, um die in den Halbleiter-Nanopartikeln gespeicherten Ladungsträger aus der Halbleiter-Nanopartikelanordnung "herauszuziehen" bzw. zu entfernen. Alternativ kann ein Rücksetz-Vorgang dergestalt ausgebildet sein, Ladungsträger mit einer entgegen gesetzten Polarität zu den in den Halbleiter-Nanopartikeln gespeicherten Ladungsträgern der Halbleiter-Nanopartikelanordnung zuzuführen, um eine Rekombination der gespeicherten Ladungsträger mit den zugeführten Ladungsträgern und damit ein "Löschen" der gespeicherten Ladungsträger vorzunehmen. Auf diese Weise kann der Informationsspeicher beispielsweise wieder in einen vordefinierten Anfangszustand gebracht werden.

Die hierin offenbarte technische Lehre ist in passiven beschreibbaren und gegebenenfalls löschbaren oder nichtlöschbaren Displays anwendbar. Die Lehre ist als elektro-optischer Wandler (Sensor), zum Plagiatschutz oder zur Ereignis- und Zustandsüberwachung einsetzbar, ohne dass die Information jedem völlig ohne Hilfsmittel ersichtlich wird. Ein weiteres Anwendungsgebiet ist als Garantielabel oder ganz allgemein zur Kennzeichnung. Ein passives Display oder permanent beschreibbares Photolumineszenz Quantum Dot Display, wie es hierin offenbart wird, kann in verschiedenen Bereichen Anwendung finden, zum Beispiel bei einem Hinweisschild, Aufkleber, Etikett, einer Tafel, einem losen Blatt, Heft, Buch und einem Flip-Chart.

In weiteren Ausführungsbeispielen kann der Informationsspeicher zumindest eine der Elektroden 1 und/oder 5 umfassen. Es ist auch möglich, dass der Informationsspeicher eine Lichtquelle zur optischen Anregung umfasst, sodass die gespeicherte Information mittels Aktivieren der Lichtquelle sichtbar wird.

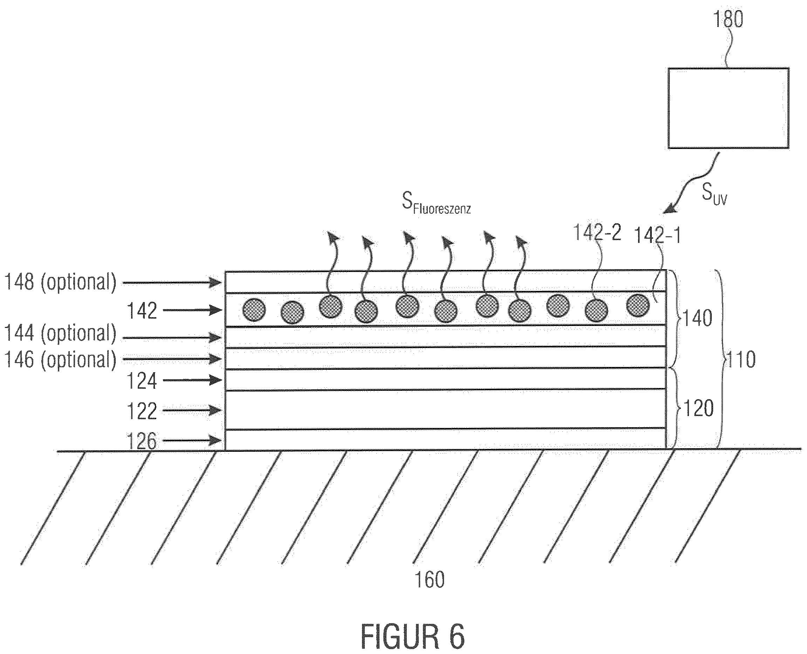

Im Folgenden wird nun anhand von Fig. 6 der prinzipielle Aufbau und die prinzipielle Funktionsweise einer erfindungsgemäßen Sensoranordnung gemäß einem Ausführungsbeispiel der vorliegenden Erfindung beschrieben.

Wie nun in Fig. 6 dargestellt ist, weist die beispielweise als Schichtstapel aufgebaute Sensoranordnung 110 ein kraftsensitives Element 120 und ein damit verbundenes Anzeigeelement 140 auf. Bezüglich des in Fig. 6 dargestellten Schichtstapels sollte beachtet werden, dass dieser vertikale Aufbau nur beispielhaft ist, wobei auch eine lateral zueinander ausgerichtete Anordnung des kraftsensitiven Elements 120 und des Anzeigeelements 140 denkbar ist. Das kraftsensitive Element 120 und das Anzeigelement 140 können also bzgl. der Oberfläche des mechanischen Bauteils 160 also übereinander oder auch nebeneinander angeordnet sein. Bei der nachfolgenden Beschreibung wird aber im Allgemeinen auf eine als Schichtstapel ausgebildete Sensoranordnung 110 Bezug genommen.

Die Sensoranordnung 110 ist nun beispielsweise direkt an ein zu überwachendes mechanisches Bauteil 160 angebracht, d. h. die Sensoranordnung 110 kann (bei Verbundwerkstoffen) beispielsweise in Form einer Folie auf oder in das mechanische Bauteil 160 laminiert sein oder kann bei Spritzgussteilen bei einem Hinterspritzvorgang in das mechanische Bauteil 160 eingebettet sein. Somit kann eine kraft-, form- oder stoffschlüssige Verbindung des kraftsensitiven Elements 120 mit dem zu überwachenden mechanischen Bauteils 160 hergestellt werden.

Als kraftsensitives Element 120 können beispielsweise Piezoelemente in Form von piezoelektrischen Keramikmaterialien, Polymerfolien oder Keramik-Polymer-Kompositen zum Einsatz kommen, wobei auf eine Piezoschicht 122 des kraftsensitives Elements 120 zumindest eine kontaktierbare Elektrode 124 aufgebracht ist, um dort basierend auf einer mechanischen Belastung des mechanischen Bauteils 160, d. h. aufgrund einer äußeren Krafteinwirkung, eine elektrische Ladungsmenge Q₀ eines Ladungsträgertyps bereitzustellen. Optional kann auch eine weitere kontaktierbare Elektrode 126 vorgesehen werden, an der eine entsprechende Ladungsmenge des (zu der Elektrode 124) komplementären Ladungsträgertyps abgreifbar ist. Sollten also die beiden Elektroden 124, 126 an dem kraftsensitiven Element 120 vorgesehen sein, werden dort jeweils Ladungsmengen Qo eines komplementären Ladungsträgertyps bereitgestellt. Bezüglich der jeweiligen Grundfläche des kraftsensitives Elements 120 der Sensoranordnung 110 ist anzumerken, dass i. W. keine Abmessungsbeschränkungen vorliegen. Somit kann die Grundfläche des kraftsensitives Elements 120 abhängig von der Geometrie des mechanischen Bauteils 160 gewählt werden. Mögliche Dicken zum Beispiels eines Piezoelements als das kraftsensitive Elements 120 können von molekularen Monolagen bis zu einigen Zentimetern reichen.

Im Rahmen der vorliegenden Erfindung können somit jegliche unter den Oberbegriff "Piezo-Elemente" fallenden Sensorelemente, die basierend auf einer einwirkenden mechanischen Belastung als Ausgangssignal eine abgreifbare Spannung oder Ladungsmenge bereitstellen, als kraftsensitive Elemente 120 eingesetzt werden.

Das kraftsensitive Element 120 ist nun so (kraft-, form- oder stoffschlüssig) mit den zu überwachenden mechanischen Bauteil 160 verbunden, um die auf das mechanische Bauteil 160 einwirkenden mechanischen Belastungen und Kräfte, die zum Beispiel als Verformungen des mechanische Bauteils 160 und damit des kraftsensitiven Elements 120 auftreten, unmittelbar am Entstehungsort an dem mechanischen Bauteil 160 aufzunehmen. Das kraftsensitive Element 120 ist somit als ein sogenannter Kraftaufnehmer bzw. Kraftsensor ausgebildet, mit dem eine Kraft gemessen wird, die auf das kraftsensitive Element 120 einwirkt, wobei dies sowohl Druck-, Zug-, Stoß- und Biegebelastungen sind. Die mechanische(n) Belastung(en) kann/können sowohl statisch als auch dynamisch vorliegen.

Je nach Stärke der auf das zu überwachende mechanische Bauteil 160 einwirkenden mechanischen Belastung bzw. Kraft wird von dem kraftsensitiven Element 120, das z. B. in Form einer Piezoschicht vorliegt, eine elektrische Spannung über dem kraftsensitiven Element 120 erzeugt, die als definierte, elektrische Ladungsmenge Q₀ (einer Ladungsträgerpolarität) an dem Kontaktbereich 124 abgreifbar ist.

Das kraftsensitive Element 120 kann also ausgebildet sein, um erst bei Überschreiten eines Grenzwerts für die mechanische Belastung die elektrische Ladungsmenge Q₀ basierend auf der einwirkenden mechanischen Belastung bereitzustellen. Alternativ kann das kraftsensitive Element 120 ausgebildet sein, um die elektrische Ladungsmenge Q₀ kontinuierlich basierend auf und z. B. proportional zu der einwirkenden mechanischen Belastung bereitzustellen. Die von dem kraftsensitiven Element 120 bereitgestellte Ladungsmenge Q₀ kann nun einerseits angeben, dass ein Grenzwert für die mechanische Belastbarkeit des mechanischen Bauteils bereits überschritten ist. Alternativ kann die von dem kraftsensitiven Element 120 bereitgestellte Ladungsmenge Q₀ kontinuierlich und z. B. proportional zur einwirkenden mechanischen Belastung erzeugt werden, um beispielsweise über eine vorgegebene Zeitdauer die insgesamt auf das mechanische Bauteil ausgeübte mechanische Belastung wiederzugeben.

Dem kraftsensitiven Element 120 zum Bereitstellen einer elektrischen Ladungsmenge Qo, die auf der auf das angekoppelte, mechanische Bauteil 160 einwirkenden mechanischen Belastung basiert, ist nun ein Anzeigeelement 140 mit einer Halbleiter-Nanokristallanordnung 142 zugeordnet, wobei die Halbleiter-Nanokristallanordnung 142 eine Fluoreszenzeigenschaft aufweist, die basierend auf einer der Halbleiter-Nanokristallanordnung zugeführten, elektrischen Ladungsmenge (einer Polarität) einstellbar bzw. änderbar ist. Das kraftsensitive Element 120 ist nun so mit den Anzeigeelement 140, d. h. beispielsweise mit einer flächig oder strukturiert ausgebildeten Elektrode 144 des Anzeigeelements 140 gekoppelt, um der Halbleiter-Nanokristallanordnung des Anzeigeelements 140 zumindest einen Teil der von dem kraftsensitiven Element 120 erzeugten Ladungsmenge Q₀ zuzuführen, um dadurch die Fluoreszenzeigenschaft der Halbleiter-Nanokristallanordnung 142 des Anzeigeelements 140 basierend auf der von dem kraftsensitiven Element 120 erfassten mechanischen Belastung des zu überwachenden mechanischen Bauelements 160 einzustellen bzw. zu ändern. Somit dient das Anzeigelement 140 als Speicher- bzw. Indikatorschicht für den Belastungszustand des mechanischen Bauelements 160.

Wie nun in Fig. 6 prinzipiell dargestellt ist, weist die Halbleiter-Nanokristallanordnung 140 innerhalb eines Trägermaterials 142-1 eine große Anzahl von Halbleiter-Nanokristallen bzw. Halbleiter-Nanopartikeln 142-2 auf. Optional kann auf der Halbleiter-Nanokristallanordnung 142 noch eine für die emittierte Fluoreszenzstrahlung transparente Schutzschicht oder eine transparente und leitfähige Gegenelektrodenschicht 148 angeordnet sein.

Die der Halbleiter-Nanokristallanordnung 142 des Anzeigeelements 140 zugeordnete Elektrode 144 ist nun beispielsweise über eine oder mehrere kontaktierende Zwischenschichten 146, die z. B. für den jeweils den Nanopartikeln 142-2 zuzuführenden Ladungsträgertyp durchlässig und für den komplementären Ladungsträgertyp undurchlässig ist/sind, mit dem Kontaktbereich 124 des kraftsensitiven Elements 120 verbunden. Beispielsweise ist das Anzeigeelement 140 als eine sog. Halbleiter-Nanokristall-Kompositschicht über die kontaktierende(n) Zwischenschicht(en) 146 auf das als Piezoelement 122 ausgebildete kraftsensitive Element 120 aufgebracht, wodurch sich der in Fig. 6 dargestellte Schichtstapel für die Sensoranordnung 110 ergibt. Es können auch andere elektrische Verbindungen, z. B. in Form von Leitungen, Vias, etc, zwischen einem der Kontaktbereiche 124, 126 und einer der Elektroden 144, 148 vorgesehen sein, um die elektrische Ladungsmenge Q₀ des gewünschten Ladungsträgertyps den Nanopartikeln 142-2 zuzuführen. Optional können bei einer Implementierung der Sensoranordnung 110 als Schichtstapel, bei dem das kraftsensitive Element 120 und das Anzeigelement 140 übereinander liegend angeordnet sind, der Kontaktbereich 124 und die Elektrode 144 beispielsweise auch als ein gemeinsames Element ausgebildet sein.

Bezüglich der jeweiligen Grundfläche des Anzeigeelements 140 der Sensoranordnung 110 ist anzumerken, dass i. W. keine Abmessungsbeschränkungen vorliegen. Somit kann die Grundfläche des Anzeigeelements 140 abhängig von der Geometrie des mechanischen Bauteils 160 gewählt werden. Mögliche Dicken des Anzeigeelements 140 können von molekularen Monolagen bis zu einigen Millimetern reichen.

In diesem Zusammenhang wird daraufhingewiesen, dass Halbleiter-Nanokristalle bei einer höher energetischen optischen Anregung S_{UV} z. B. mittels einer externen Anregungseinrichtung 180 in Form einer UV-Lichtquelle oder eines Lasers usw. entsprechend ihrer Bandlücke Fluoreszenzstrahlung S_{Fluoreszenz} emittieren. Durch die Anregung der Halbleiter-Nanokristalle 142-2 in der Halbleiter-Nanokristallanordnung 142 werden in den Nanokristallen sogenannte Elektronen-Loch-Paare (Exzitonen) erzeugt, die unter Aussendung eines Fluoreszenzphotons rekombinieren. Entsprechend dem "Quantum Confinement Effekt" kann durch eine Variation der Partikelgröße der Halbleiter-Nanopartikel bzw. der Halbleiter-Nanokristalle die jeweilige Wellenlänge (d. h. Farbe) der Fluoreszenzemission des Anzeigeelements 140 geändert werden [3, 4]. Halbleiter-Nanokristalle haben nun die Eigenschaft, dass die Energie der ausgesandten Fluoreszenzphotonen, also der Energieabstand vom Grundzustand zu angeregtem Zustand, nicht nur vom jeweiligen Halbleitermaterial der Halbleiter-Nanokristall, sondern auch von der jeweiligen Partikelgröße der Halbleiter-Nanokristalle abhängt. Somit lassen sich beispielsweise aus demselben Halbleitermaterial unterschiedlich große Partikel 142-2 herstellen, die in unterschiedlichen Farben fluoreszieren, wobei sich die Farbe, d. h. die Emissionswellenlänge, durch die jeweilige Nanopartikelgröße einstellen lässt. So emittieren kleine Partikel bei einer kleineren Wellenlänge, d. h. bei einer größeren Photonenenergie, während größere Partikel bei größeren Wellenlängen, d. h. bei kleineren Photonenenergien, emittieren (siehe auch Quantum-Confinement-Effekt). Aufgrund der Quantenmechanik ist nun erklärbar, dass durch die räumliche Begrenzung der Ladungsträger der Abstand der Energieniveaus von den räumlichen Abmessungen, d. h. der Partikelgröße, abhängig ist. Solche Systeme werden auch als Quantenpunkte ("Quantum Dots") bezeichnet.

Somit ist es möglich, nur mit einem Material für die Halbleiter-Nanokristalle basierend auf der Größe der Halbleiter-Nanopartikel eine sehr große Bandbreite im Emissionsspektrum der Halbleiter-Nanokristallanordnung 142 des Anzeigeelements 140 einzustellen und zu erzeugen. So können erfindungsgemäß Halbleitermaterialien für Nanokristalle bzw. Nanopartikel zum Einsatz kommen, die je nach Größe und Material in einem Wellenlängenbereich z. B. von 400 nm bis 1700 nm Licht emittieren, wobei der für Menschen sichtbare Spektralbereich von etwa 380 bis 780 nm reicht. Dazu zählen beispielsweise Nanokristalle sowohl vom Core-Typ als auch vom Core/Shell-Typ der Halbleiter-Materialien CdSe, CdTe, CdS, GaAs, GaSb, HgTe, InAs, InP, InSb, PbSe, PbS, PbTe, ZnSe, ZnTe, Germanium und Silizium.

Die Fluoreszenzeigenschaften der Halbleiter-Nanokristalle, d. h. insbesondere die Intensität und spektrale Lage bzw. Breite der Emissionsbänder, hängt nun insbesondere von elektrischen Feldern und Ladungen in den jeweiligen Nanopartikeln oder in deren Umgebung ab. Diese Eigenschaft von Halbleiter-Nanopartikeln wird nun bei der erfindungsgemäßen Sensoranordnung dazu genutzt, die von dem kraftsensitiven Element 120 erfasste mechanische Belastung des mechanischen Bauelements 160 mittels des Anzeigeelements 140 bzw. dessen Halbleiter-Nanokristallanordnung 142 anzuzeigen.

Ein Quantenpunkt (quantum dot) ist eine nanoskopische Materialstruktur, die bei Ausführungsbeispielen der vorliegenden Erfindung ein Halbleitermaterial in Form von Halbleiter-Nanopartikeln aufweist. Die Ladungsträger (Elektronen oder Löcher) in einem Quantenpunkt sind in ihrer Beweglichkeit in allen drei Raumrichtungen soweit eingeschränkt, dass ihre Energie nicht mehr kontinuierliche Werte, sondern nur diskrete Werte annehmen kann. Typischerweise beträgt die atomare Größenordnung von Quantenpunkten etwa 10²-10⁵ Atome. Wie in Fig. 6 dargestellt ist, sind die Halbleiter-Nanopartikel 142-2 in einem Trägermaterial 142-1 untergebracht bzw. eingebettet. Insbesondere können die Quantenpunkte, d. h. die Halbleiter-Nanopartikel 142-2, mit einer Hülle bzw. Hüllenschicht oder einer Benetzungsschicht versehen sein, wobei diese Hüllen- oder Benetzungsschicht der Halbleiter-Nanopartikel bei deren Herstellung so gezielt ausgebildet werden kann, dass die Halbleiter-Nanopartikel unterschiedlicher Größe unterschiedlich auf eine Ladungsträgerzuführung von der Elektrodenschicht 144 ansprechen, d. h. sich die Fluoreszenzeigenschaften unterschiedlich großer Halbleiter-Nanopartikel basierend auf den von dem Piezoelement 120 eingebrachten Ladungsträgern unterschiedlich ändern. Da nun darüber hinaus Halbleiter-Nanopartikel unterschiedlicher Größe eine farblich unterschiedliche Fluoreszenzemission aufweisen, kann bei Zuführung der Ladungsträgermenge Q₀ von der Piezoschicht 120 aufgrund des unterschiedlichen Ansprechens der Halbleiter-Nanopartikel 142-2 eine entsprechende Farbveränderung bei der Fluoreszenzemission erhalten werden, die auf der auf das mechanische Bauteil 160 einwirkende mechanische Belastung basiert.

Die Sensorwirkung der erfindungsgemäßen Sensoranordnung 110 besteht nun darin, dass die von dem kraftsensitiven Element 120 in der Piezoschicht 122 generierten Ladungen bzw. Ladungsträger (eines Ladungsträgertyps) zu den jeweiligen Halbleiter-Nanokristallen 142-2 transportiert und in die Halbleiter-Nanokristalle injiziert werden. Die Nanopartikel werden demzufolge ionisiert. Zu einer solchen Ionisierung sind Elektronen oder Löcher geeignet, wobei der positiv-ionisierte Zustand von Nanopartikeln aufgrund der höheren effektiven Masse der Löcher zeitlich stabiler ist, und somit eine Information des jeweils erfassten mechanischen Belastungszustands des zu überwachenden mechanischen Bauelements 160 länger, z. B. bis zu mehreren Jahren, abgespeichert werden kann.

Erfindungsgemäß wird nun ausgenutzt, dass eine derart in die Halbleiter-Nanokristalle 142-2 eingebrachte, "delokalisierte" Ladung im Kern eines Quantenpunkts (Quantum Dots) die Fluoreszenz dieses Nanopartikels beeinflusst bzw. unterdrückt [5]. Unter einer Delokalisierung versteht man einen Zustand, wenn eine Ladung in einer Atomgruppe nicht genau lokalisierbar ist, sondern über die einzelnen Atome verteilt ist.

Durch eine externe Anregung, zum Beispiel eine Photoanregung, im Halbleiter-Nanokristall gebildete Elektronen-Loch-Paare rekombinieren wie in einem neutralen Halbleiter-Nanopartikel, wobei jedoch die freiwerdende Energie nicht als Fluoreszenzphoton ausgesendet, sondern an die zusätzlich eingebrachte (delokalisierte) Ladung übertragen wird. Dieser als Auger-Rekombination bekannte strahlungslose Prozess [6] wird nun bei der erfindungsgemäßen Sensoranordnung ausgenutzt, um den von dem kraftsensitiven Element 120 erfassten Belastungszustand des mechanischen Bauelements 160 zu speichern bzw. sichtbar zu machen.

Erfährt nun das mechanische Bauteil 160 in einem dem kraftsensitiven Element 120 zugeordneten Bereich eine (zum Beispiel unzulässig hohe) mechanische Belastung, so wird die von dem kraftsensitiven Element 120 erzeugte Ladungsmenge Q₀ zumindest teilweise über die Elektrode 144 des Anzeigeelements 140 in die Halbleiter-Nanokristallanordnung 142 eingebracht, so dass sich aufgrund der oben beschriebenen physikalischen Zusammenhänge hinsichtlich der Beeinflussung der Fluoreszenzeigenschaft der Halbleiter-Nanokristallanordnung 142 basierend auf der eingebrachten Ladungsmenge Q₀ das Fluoreszenzverhalten der Halbleiter-Nanokristallanordnung 142 des Anzeigeelements 140 (die auch Indikatorschicht bezeichnet wird) verändert bzw. verringert.

Ist nun beispielsweise die der Halbleiter-Nanokristallanordnung 142 zugeordnete Elektrode 144 ganzflächig ausgebildet, wird sich bei einer optischen Anregung die Fluoreszenz der Halbleiter-Nanokristallanordnung 142 des Anzeigeelements 140 entsprechend ganzflächig verändern bzw. verringern.

Weist beispielsweise die Halbleiter-Nanokristallanordnung 142 im Wesentlichen Halbleiter-Nanopartikel 142-2 der gleichen Art bzw. Größe auf, so wird sich aufgrund der eingebrachten Ladungsträger die Fluoreszenzeigenschaft der Halbleiter-Nanokristallanordnung 142 ganzflächig verringern. Sollte die Halbleiter-Nanokristallanordnung 142 z. B. unterschiedliche Halbleiter-Nanokristallpartikel 142-2, die entweder unterschiedliche Materialien oder unterschiedliche Größen aufweisen, umfassen, so wird sich beispielsweise aufgrund des unterschiedlichen Ansprechens der verschiedenen Gruppen von Halbleiter-Nanopartikeln die Farbzusammensetzung des von der Halbleiter-Nanokristallanordnung 142 emittierten Fluoreszenzlichts verändern, was als eine Farbveränderung des Fluoreszenzlichts wahrnehmbar ist.

Beide im Vorhergehenden dargestellten Vorgehensweisen sind nun beispielsweise bei einer erfindungsgemäßen Halbleiter-Nanokristallanordnung 142 sowohl getrennt als auch kombiniert einsetzbar, um die auf ein mechanisches Bauteil 160 einwirkende mechanische Belastung über die Halbleiter-Nanokristallanordnung 142 zu visualisieren. Dazu können beispielsweise vorgegebene Bereiche der Halbleiter-Nanokristallanordnung 142 nur eine vorgegebene Art von Halbleiter-Nanopartikeln 142-2 aufweisen, während andere Bereiche zumindest zwei oder mehr unterschiedliche Arten von Halbleiter-Nanopartikeln aufweisen. Damit kann ein wahrnehmbarer Kontrast bzw. eine Änderung der Darstellung basierend auf einer auf das mechanische Bauteil 160 einwirkenden mechanischen Belastung verdeutlicht bzw. verstärkt werden. Darüber hinaus ist es möglich, durch die Verwendung unterschiedlicher Halbleiter-Nanopartikel durch das unterschiedliche Ansprechen auf die zugeführten Ladungsträger einfache Zeichen bzw. Symbole bei Erfassen einer auf das mechanische Bauteil einwirkenden mechanischen Belastung an der als Indikatorelement ausgebildeten Halbleiter-Nanokristallanordnung 142 anzuzeigen.

Die oben dargestellten erfindungsgemäßen Alternativen zur Verwendung von Halbleiter-Nanopartikeln eines Typs oder unterschiedlicher Typen sind nun insbesondere auch auf den Einsatz einer strukturiert ausgebildeten Elektrode 144 des Anzeigeelements 140 einsetzbar.

Ist nun die Elektrode 144 des Anzeigeelements 140 bereichsweise metallisiert ausgebildet, können lokal variierende Fluoreszenzverringerungen (entsprechend der Struktur der Elektrode 144) in der Halbleiter-Nanokristallanordnung 142 hervorgerufen werden, so dass als Maß für die mechanische Belastung an dem mechanischen Bauelement 160 ein optischer Kontrast in dem emittierten Fluoreszenzlicht (z. B. zu benachbarten Sensoranordnungen 110) direkt an dem zu überwachenden mechanischen Bauteil sichtbar wird.

Die Metallisierung der Elektrode 144 kann nun beispielsweise so ausgebildet sein, dass diese einem bestimmten Typ von Halbleiter-Nanopartikeln (falls mehrere Typen von Halbleiter-Nanopartikeln vorgesehen sind) in der Halbleiter-Nanokristallanordnung 142 zugeordnet ist. Bei Zuführung der elektrischen Ladungsmenge Q₀ zu der Halbleiter-Nanokristallanordnung 142 werden somit bevorzugt die Halbleiter-Nanopartikel, die den Elektrodenbereichen 144 zugeordnet sind bzw. benachbart zu denselben angeordnet sind, die das Fluoreszenzverhalten verändernden Ladungsträger aufnehmen. Dadurch lässt sich erreichen, dass einerseits die Halbleiter-Nanokristallanordnung 142 aufgrund erhöhter Kontraste zwischen einer "normalen" Fluoreszenzeigenschaft und einer "veränderten" Fluoreszenzeigenschaft deutlich erhöht wird. Ferner können auch Zwischenstufen entsprechend der jeweils zugeführten, z. B. unterschiedlichen Ladungsmenge Q₀, deutlich angezeigt werden, so dass auch entsprechende Zwischenstufen der auf das mechanische Bauteil 160 einwirkenden mechanischen Belastung wiedergegeben werden können.

Somit kann also je nach verwendeten Nanopartikeln für die Halbleiter-Nanokristalle und/oder der jeweiligen Dokumentationspflicht dieser Kontrast, d. h. die Änderung der Fluoreszenzeigenschaft der erfindungsgemäßen Sensoranordnung 110, zum Beispiel mit dem menschlichen Auge, falls das emittierte Fluoreszenzlicht im sichtbaren Bereich liegt, oder mittels entsprechender Erfassungseinrichtungen bzw. Kameras registriert werden.

Die Dauer der Ladungsspeicherung in den Halbleiter-Nanokristallen 142-2 der Halbleiter-Nanokristallanordnung 142 des Anzeigeelements 140 und somit die Speicherung des ermittelten mechanischen Belastungszustands des zu überwachenden mechanischen Bauteils 160 hängt relativ stark von der unmittelbaren Umgebung der Halbleiter-Nanokristalle ab, d. h. im Wesentlichen von der die Halbleiter-Nanopartikel umgebenden Materialschicht 142-1 und/oder von dem optionalen zusätzlichen Einbettungsmaterial, in das die Quantenpunkte eingebettet sein können.

Das Schichtmaterial 142-1 der Halbleiter-Nanokristallanordnung kann als ein Verbundwerkstoff bzw. Kompositwerkstoff aus zwei oder mehr verbundenen Materialien vorliegen. Bei Teilchen- und Faserverbundwerkstoffen sind Teilchen bzw. Fasern in eine andere Komponente des Verbundwerkstoffes, der sogenannten Matrix, eingebettet. Als Matrixmaterialien (Matrizen) können dieelektrische Materialien, wie zum Beispiel Polymer-, Keramik- oder Glas-Materialien, leitende und halbleitende organische Stoffe, wie zum Beispiel verschiedene Thiophene, BCP, TPD, CBP, oder auch Komposite mit leitfähigen Partikeln und Fasern, zum Beispiel TiO₂, ZnO, ITO, Silber, Gold, Graphit, Graphitfasern, CNT, verwendet werden. Diese Aufzählung ist als beispielhaft und nicht als abschließend anzusehen.

Bezüglich der vorliegenden Erfindung sollte beachtet werden, dass mit dieelektrischen Matrixmaterialien tendenziell längere Speicherzeiten der Ladungsspeicherung in den Halbleiter-Nanokristallen erreicht werden können, da bei dieelektrischen Matrixmaterialien keine energetischen Zustände für einen effektiven Ladungstransport vorhanden sind.

Anhand der in Fig. 6 beispielhaft dargestellten Sensoranordnung 110 wird darauf hingewiesen, dass die jeweiligen Polaritäten der beteiligten Ladungsträger auch vertauscht werden können, so dass Löcher anstelle von Elektronen in die Halbleiter-Nanokristalle injiziert werden, und umgekehrt. Um diese Veränderung der Ausführungsbeispiele vorzunehmen, ist lediglich jeweils die Polarisierung des Piezoelements oder die Kontaktierung entsprechend zu ändern.

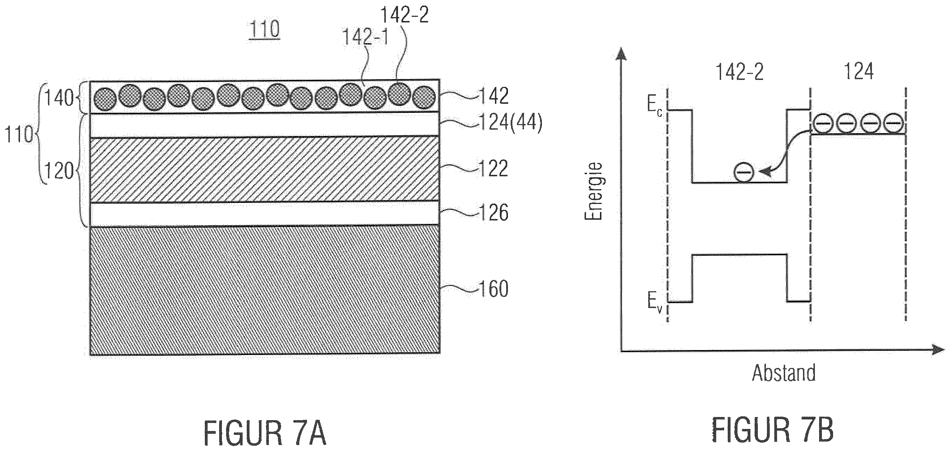

Im Folgenden werden nun anhand der Fig. 7A-B, 8A-B und 9A-B beispielhaft einige mögliche Ausführungsformen der erfindungsgemäßen Sensoranordnung 110 zur Detektion, Speicherung und Auswertung von mechanischen Belastungen an einem mechanischen Bauteil 160 prinzipiell dargestellt.

Bezüglich der nachfolgend dargestellten Ausführungsformen wird nochmals darauf hingewiesen, dass allen erfindungsgemäßen Konfigurationen ein Wirkungsprinzip gemein ist, das auf der Erzeugung von Ladungen beispielsweise mittels einer piezoelektrischen Schicht und der Injektion zumindest eines Teils dieser Ladungen in die Halbleiter-Nanokristalle zur Beeinflussung der Fluoreszenzeigenschaft des Anzeigeelements 140 beruht.

Fig. 7A zeigt nun ein mögliches Ausführungsbeispiel der erfindungsgemäßen Sensoranordnung 110 in Form einer als Schichtstapel angeordneten funktionalen Doppelschicht der Sensoranordnung 110 mit dem kraftsensitiven Element 120 und dem Anzeigeelement 140. Wie in Fig. 7A gezeigt ist, ist das kraftsensitive Element 120, zum Beispiel in Form eines Piezoelements, kraft-, form- oder stoffschlüssig mit dem zu überwachenden mechanischen Bauteil 160 verbunden bzw. in dasselbe eingebettet. Das Piezoelement 120 ist nun beispielsweise derart polarisiert, dass sich bei Krafteinwirkung die negativen Ladungen Q₀ (Elektronen) an der oberen Elektrode 124 sammeln, während sich an der optionalen weiteren Elektrode 126 die positiven Ladungen anhäufen. Über die obere Elektrode 124 ist dieses Piezoelement 120 mit der darüber angeordneten Halbleiter-Nanokristallanordnung 140 bzw. mit einer der Halbleiter-Nanokristallanordnung 142 zugeordneten Elektrode (nicht gezeigt in Fig. 7A) leitfähig verbunden. Das Trägermaterial 142-1 der Halbleiter-Nanokristallanordnung 142, in das die Halbleiter-Nanokristalle bzw. Halbleiter-Nanopartikel eingebettet sind, kann beispielsweise aus einer nur wenige Nanometer (z. B. 10-100 nm) bis mehrere Millimeter (z. B. 1-10mm) dicken dieelektrischen Polymerschicht bestehen. Bei der in Fig. 7A dargestellten Sensoranordnung 110 sind die Halbleiter-Nanokristalle 142-2 also beispielsweise in einem als elektronenleitenden Matrixmaterial ausgebildeten Trägermaterial 142-1 der Halbleiter-Nanokristallanordnung 142 eingebettet.

Wie bereits im Vorhergehenden angegeben wurde, kann die in Fig. 7A dargestellte Elektrode 124, die gleichzeitig die Funktion der in Fig. 6 dargestellten Elektrode 144 übernimmt, ganzflächig, d. h. durchgängig metallisiert, oder auch strukturiert, d. h. bereichsweise metallisiert, ausgebildet sein.

Fig. 7B zeigt nun in einer vereinfachten Ansicht ein prinzipielles Energieniveauschema für das in Fig. 7A dargestellte Ausführungsbeispiel der erfindungsgemäßen Sensoranordnung 110. Wird also beispielsweise das mechanische Bauteil 160 aufgrund einer äußeren mechanischen Belastung bzw. Krafteinwirkung verformt, so werden in dem kraftschlüssig mit dem mechanischen Bauteil 160 gekoppelten kraftsensitiven Element 120 (in der Piezoschicht) Ladungen generiert, wobei die resultierende Ladungsmenge Q₀ von der Stärke der einwirkenden mechanischen Belastung abhängig ist, d. h. bei Überschreiten eines mechanischen Grenzwerts auftritt oder der mechanischen Belastung proportional ist. Entsprechend der hier in Fig. 7A-B angenommenen Polarisation des Piezoelements 120 sammeln sich die Elektronen zunächst an der (oberen) Elektrode 124. Besitzt nun das Elektrodenmaterial, wie hier in Fig. 7B gezeigt, eine geringere Austrittsarbeit im Vergleich zur Leitungsbandkante der Halbleiter-Nanokristalle 142-2, so ist es für die negativen Ladungen (Elektronen) energetisch günstiger, entsprechende Zustände im Leitungsband E_{c} der Halbleiter-Nanokristalle 142-2 zu besetzen. Dieser Vorgang ist in dem in Fig. 7B dargestellten prinzipiellen Energieniveauschema mittels des Pfeils zwischen den Bereichen 124 und 142-2 dargestellt. Die Elektronen fließen daher über Diffusions- bzw. Tunnelprozesse in Richtung der Halbleiter-Nanokristalle 142-2 ab und werden in diesen "gespeichert".

Wie im Vorhergehenden beschrieben wurde, bewirken diese in den Halbleiter-Nanokristallen 142-2 gespeicherten "delokalisierten" Ladungen eine Beeinflussung bzw. ein "Ausschalten" der Fluoreszenzeigenschaft der nunmehr ionisierten Halbleiter-Nanokristalle und damit eine lokale Verringerung der Intensität (d. h. der Helligkeit) der emittierten Fluoreszenzstrahlung. Damit ist die ursprüngliche, äußere Krafteinwirkung auf das zu überwachenden mechanische Bauteil 160 lokal als eine verminderte Fluoreszenzeigenschaft des Anzeigeelements 140 optisch detektierbar.

Die Detektierbarkeit einer Veränderung der Fluoreszenzeigenschaft des Anzeigeelements 140 kann dadurch noch verstärkt werden, indem die Elektrodenstruktur 144 strukturiert, beispielsweise in einem linearen Raster ausgebildet wird, so dass sich entsprechend der Ionisierung der Halbleiter-Nanokristalle in der Nähe der metallischen Bereiche der Elektrode 144 auch die zugehörige Fluoreszenzeigenschaft der Halbleiter-Nanokristalle ändert, so dass sich beispielsweise ein Linien-Kontrast ergibt, der umso höher ist, um so größer die von dem kraftsensitiven Element 120 bereitgestellte Ladungsmenge Q₀ ist. Wie im vorhergehenden angesprochen können natürlich auch unterschiedliche Typen von Halbleiter-Nanopartikel mit unterschiedlicher Größe und/oder Materialzusammensetzung in der Halbleiter-Nanokristallanordnung 140 kombiniert werden.

Aufgrund der Speicherwirkung der Halbleiter-Nanokristalle ist die zu überwachende, mechanische Einwirkung einer externen Kraft auf das mechanische Bauteil 160 auch noch eine Zeitdauer lang, zum Beispiel zumindest Stunden oder auch Tage und bis zu einigen Jahren, nach dem Ereignis, d. h. der mechanischen Belastung, nachweisbar.

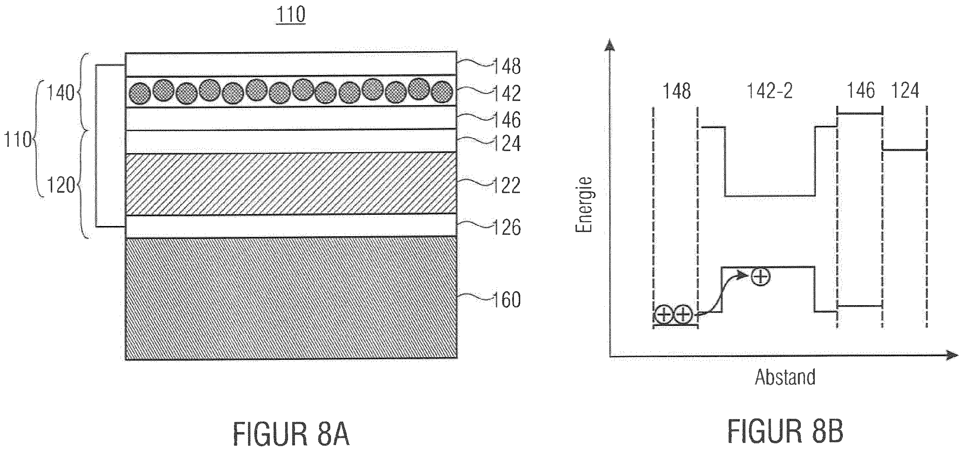

Im Folgenden wird nun anhand der Fig. 8A - B ein weiteres prinzipielle Ausführungsbeispiel der erfindungsgemäßen Sensoranordnung 110 und deren prinzipielle Funktionsweise erläutert.

Das kraftsensitive Element 120, zum Beispiel in Form eines Piezoelements, ist wiederum kraftschlüssig an dem mechanischen Bauteil 160 angebracht. Bezüglich der Fig. 8A - B wird wiederum angenommen, dass die Piezoschicht 120 derart polarisiert ist, dass sich an deren oberen Elektrode 126 die negativen Ladungen sammeln, während sich an der unteren Elektrode 124 die positiven Ladungsträger (Ladungsmenge Q₀) sich ansammeln.

Im Gegensatz zu der in Fig. 7A dargestellten Ausführungsform der Sensoranordnung 110 sind bei der in Fig. 8A dargestellten Sensoranordnung 110 die Halbleiter-Nanokristalle 142-2 in einem als löcherleitenden Matrixmaterial ausgebildeten Trägermaterial 142-1 der Halbleiter-Nanokristallanordnung 142 eingebettet. Zwischen der Elektrode 124 und der Halbleiter-Nanokristallanordnung 142 (bzw. Nanokristall-Kompositschicht) ist eine Isolationsschicht 146 als Elektronen-Block-Schicht eingefügt. Beispielsweise ist eine transparente Gegenelektrode 144 mit der unteren Elektrode 124 der Piezoschicht 120 elektrisch verbunden.

Durch eine externe Krafteinwirkung auf das zu überwachende mechanische Bauteil 160 werden nun wiederum in der Piezoschicht 122 Ladungen abhängig von bzw. proportional zu der Stärke der Krafteinwirkung generiert. Da beide Elektroden 124, 126 des kraftsensitiven Elements 120 mit dem Anzeigeelement 140 verbunden sind, kommt es zu einem Stromfluss ausgehend von der Elektrodenschicht 144 durch die Halbleiter-Nanokristallanordnung 142 mit dem Trägermaterial 142-1 und den Halbleiter-Nanokristallen 142-2. Der Stromfluss wird bei dem in Fig. 8A dargestellten Ausführungsbeispiel dabei von den positiven Ladungsträgern getragen. Zumindest ein Teil dieser positiven Ladungen wird in die Halbleiter-Nanokristalle 142-2 injiziert und "gespeichert", wodurch sich wiederum die Änderung der Fluoreszenzeigenschaft zum Beispiel in Form einer lokalen Unterdrückung der Fluoreszenz ergibt.

Entsprechend dem erfindungsgemäßen Konzept wird damit die auf das zu überwachende mechanische Bauteil 160 einwirkende mechanische Belastung mit Hilfe der in dem Anzeigeelement 140 angeordneten Halbleiter-Nanokristallanordnung 142 sichtbar gemacht, indem beispielsweise mittels einer externen optischen Anregung eine Fluoreszenz der Halbleiter-Nanokristallanordnung 142 angeregt wird, wobei sich die Bauteilbelastung als optischer Kontrast in der Fluoreszenzemission ergibt.

In Abbildung 8B sind nun wiederum prinzipiell das Energieniveauschema für das anhand von Fig. 8A dargestellte Ausführungsbeispiel erfindungsgemäße Sensoranordnung 110 dargestellt.

Entsprechend der hier angenommenen Polarisation sammeln sich wieder die Elektronen zunächst an der oberen Elektrode 124, während sich die positiven Ladungen an der unteren Elektrode 126 ansammeln, die mit der Elektrodenschicht 144 des Anzeigeelements 140 verbunden ist. Besitzt das Elektrodenmaterial, wie in Fig. 8B gezeigt, eine geringere Austrittsarbeit im Vergleich zur Valenzbandkante der Halbleiter-Nanokristalle, so ist es für die positiven Ladungen energetisch günstiger, entsprechende Zustände im Valenzband Ev der Halbleiter-Nanokristalle 142-2 zu besetzen, wie dies prinzipiell in dem Energieniveauschema von Fig. 8B dargestellt ist. Die positiven Ladungen fließen daher über Diffusions- und Tunnelprozesse in Richtung der Halbleiter-Nanokristalle 142-2 ab und werden in diesen gespeichert. Wie bereits im Vorherigen beschrieben wurde, bewirken diese Ladungen eine Veränderung bzw. ein Ausschalten der Fluoreszenzeigenschaft der ionisierten Halbleiter-Nanokristalle 142-2. Damit ist die ursprüngliche, äußere Krafteinwirkung auf das Bauteil 160 lokal als eine verminderte Fluoreszenz der Halbleiter-Nanokristallanordnung 142 des Anzeigeelements 140 optisch detektierbar. Aufgrund der Speicherwirkung der Nanokristalle ist die Einwirkung der externen Kraft auf das zu überwachende mechanische Bauteil 160 auch noch eine Zeitdauer (von bis zu mehreren Jahren) nach dem Ereignis des Einwirkens der mechanischen Belastung nachweisbar.

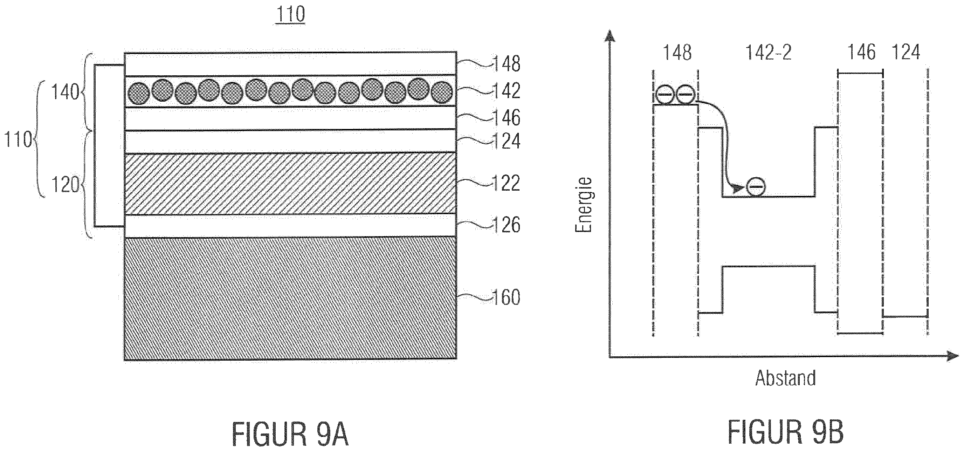

Anhand der Fig. 9A-B wird nun ein weiteres Ausführungsbeispiel zur Realisierung der erfindungsgemäßen Sensoranordnung 110 prinzipiell dargestellt. Entsprechend zu den bereits oben dargestellten Ausführungsbeispielen ist das kraftsensitive Element 120 (in Form eines Piezoelements) kraft-, form- oder stoffschlüssig an dem zu überwachenden, mechanischen Bauteil 160 angebracht bzw. darin eingebettet. Die Piezoschicht 122 des kraftsensitiven Elements 120 ist nun beispielsweise so polarisiert, dass sich an der oberen Elektrode 124 die positiven Ladungsträger ansammeln, während sich an der unteren Elektrode 126 die negativen Ladungsträger (Elektronen) ansammeln. Im Gegensatz zu der in Fig. 8A dargestellten Anordnung sind nun die Halbleiter-Nanokristalle 142-2 in einer elektronenleitenden Matrix 142-1 eingebettet. Zwischen der oberen Elektrode 126 des kraftsensitiven Elements 120 und der Halbleiter-Nanokristallanordnung 142, d. h. der entsprechenden Nanokristall-Kompositschicht 142 ist eine für positive Ladungsträger, isolierende Schicht 146 eingefügt. Eine transparente, vollflächig oder strukturiert ausgebildete Gegenelektrode 148 ist beispielsweise an der von dem kraftsensitiven Element 120 abgewandten Hauptoberfläche der Halbleiter-Nanokristallanordnung 142 angeordnet und schließt den Schichtaufbau der Sensoranordnung 110 nach oben ab. Die Elektrodenstruktur 144 des Anzeigeelements 140 ist dabei elektrisch mit der Elektrode 126 des kraftsensitiven Elements 120 verbunden.

Die durch eine Krafteinwirkung auf das zu untersuchende mechanische Bauteil 160 im kraftsensitiven Element 120 erzeugten Elektronen fließen über die transparente Deckelelektrode 148 und das Trägermaterial 142-1 der Halbleiter-Nanokristallanordnung 142 bis zu der Isolationsschicht 146. Zumindest ein Teil der Elektronen wird dabei in die Halbleiter-Nanopartikel 142-2 injiziert und gespeichert, wodurch wiederum die Fluoreszenzeigenschaft des Anzeigeelements 140 beeinflusst bzw. zumindest teilweise unterdrückt wird. Entsprechend den obigen Ausführungsbeispielen wird auch hier somit die am mechanischen Bauteil 160 einwirkende mechanische Belastung optisch sichtbar gemacht.

In Figur 9B sind nun wiederum prinzipiell das Energieniveauschema mit den relevanten Energieniveaus für das anhand von Fig. 9A dargestellte Ausführungsbeispiel erfindungsgemäße Sensoranordnung 110 dargestellt.

Entsprechend der hier angenommenen Polarisation sammeln sich die positiven Ladungen an der oberen Elektrode 124, während sich die negativen Ladungen an der unteren Elektrode 126, die mit der Elektrodenschicht 144 des Anzeigeelements 140 verbunden ist, ansammeln. Besitzt das Elektrodenmaterial 146, wie in Fig. 9B gezeigt, eine geringere Austrittsarbeit im Vergleich zur Leitungsbandkante der Halbleiter-Nanokristalle 142-2, so ist es für die negativen Ladungen energetisch günstiger, entsprechende Zustände im Leitungsband Ec der Halbleiter-Nanokristalle 142-2 zu besetzen, wie dies prinzipiell im Energieniveauschema von Fig. 9B dargestellt ist. Die negativen Ladungen fließen daher über Diffusions- und Tunnelprozesse in Richtung der Halbleiter-Nanokristalle 142-2 ab und werden in diesen gespeichert. Wie bereits im Vorherigen beschrieben wurde, bewirken diese Ladungen eine Veränderung bzw. ein Ausschalten der Fluoreszenzeigenschaft der ionisierten Halbleiter-Nanokristalle 142-2. Damit ist die ursprüngliche, äußere Krafteinwirkung lokal als eine verminderte Fluoreszenz der Halbleiter-Nanokristallanordnung 142 des Anzeigeelements 140 optisch detektierbar. Aufgrund der Speicherwirkung der Nanokristalle ist die Einwirkung der externen Kraft auf das zu überwachende mechanische Bauteil 160 auch noch eine Zeitdauer (von bis zu mehreren Jahren) nach dem Ereignis des Einwirkens der mechanischen Belastung nachweisbar.

Anhand der Fig. 7A-B, 8A-B und 9A-B wurden nun verschiedene beispielhafte Realisierungen der erfindungsgemäßen Sensoranordnung 110 gemäß Ausführungsbeispielen der vorliegenden Erfindung prinzipiell dargestellt. Bezüglich der obigen Ausführungsbeispiele wird darauf hingewiesen, dass die jeweiligen Polaritäten der beteiligten Ladungsträger auch vertauscht werden können, so dass Löcher anstelle von Elektronen in die Halbleiter-Nanokristalle injiziert werden, und umgekehrt. Um diese Veränderung der Ausführungsbeispiele vorzunehmen, ist lediglich jeweils die Polarisierung des Piezoelements entsprechend zu ändern, sowie die elektronenleitende Schicht durch eine löcherleitende Schicht (und umgekehrt) zu ersetzen.

Bezüglich aller zuvor beschriebenen Ausführungsbeispiele wird darauf hingewiesen, dass auch (zumindest zwei) unterschiedliche Typen von Halbleiter-Nanokristallen bzw. Halbleiter-Nanopartikel mit unterschiedlichen Fluoreszenzeigenschaften in dem Matrixmaterial 142-1 eingebettet sein können. Damit können beispielsweise bei externen, optischen Anregung der Fluoreszenz des Anzeigeelements 140 mit der Halbleiter-Nanokristallanordnung 142 auch beliebige Mischfarben für die Fluoreszenzemission eingestellt werden.

Ferner können auch zumindest zwei oder auch mehr unterschiedliche Typen von Halbleiter-Nanokristallen mit unterschiedlichen Fluoreszenzeigenschaften in dem Matrixmaterial 142-1 der Halbleiter-Nanokristallanordnung 142 getrennt zueinander angeordnet sein. Ferner können die Halbleiter-Nanopartikel 142-2 bzw. Kristalle in dem Matrixmaterial 142-1 entsprechend den metallisierten Bereichen der strukturierten Elektrode 144 angeordnet sein. Dadurch kann durch ein Ausblenden zumindest in den von der strukturierten Elektrode 144 überdeckten Bereichen der Farbanteil dieses Typs von Halbleiter-Nanokristallen aus der Fluoreszenzemission erreicht werden und damit ein entsprechender Farbübergang resultieren. Dieser Farbübergang ist umso stärker, d. h. kontrastreicher, umso mehr Ladungsträger in die entsprechenden Bereiche des Matrixmaterials 142-1 aus der Kontaktelektrode 144 injiziert werden.

Ist beispielsweise die Kontaktelektrode 144 ganzflächig oder in einem entsprechend feinen Raster ausgebildet, kann ein ganzflächiger, kontinuierlicher Farbübergang entsprechend der auf das zu überwachende mechanische Bauteil 160 einwirkenden mechanischen Belastung erreicht werden. Ferner ist es möglich, entsprechend der Strukturierung der Kontaktelektrode 144 beliebige vordefinierte Symbole, Zeichen oder Zeichenstrukturen in der Halbleiter-Nanokristallanordnung 142 des Anzeigeelements 140 vorzusehen, die mit basierend auf der erfassten mechanischen Belastung immer mehr hervortreten oder ab überschreiten einer maximal zulässigen Belastung bzw. zulässigen Grenzbelastung hervortreten.

Ferner wird nochmals darauf hingewiesen, dass mittels der gewählten Größe und/oder Materialzusammensetzung der Nanopartikel die resultierenden Fluoreszenzeigenschaften gezielt eingestellt werden können.

Ein ganzflächiger "kontinuierlicher" Farbübergang des Anzeigeelements 140 ist beispielsweise erreichbar, in dem die Kontaktelektrode 144 in einem ausreichend feinen (vom menschlichen Auge nicht mehr auflösbaren) Raster angeordnet ist, wobei die Halbleiter-Nanopartikel eines der Mehrzahl von unterschiedlichen Typen von Halbleiter-Nanokristallen mit einer unterschiedlichen Fluoreszenzeigenschaft entsprechend, d. h. dem Raster folgend, in dem Matrixmaterial 142-1 angeordnet ist.

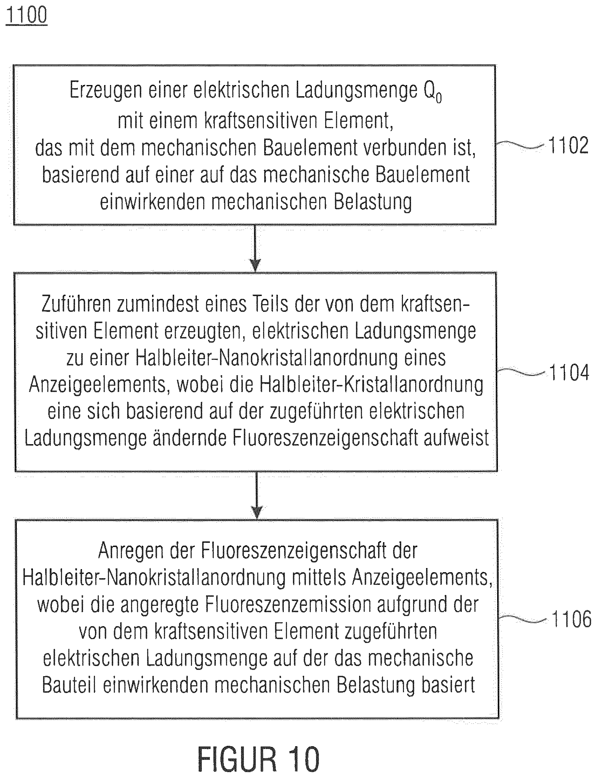

Im Folgenden wird nun anhand von Fig. 10 ein Verfahren zum Anzeigen bzw. Visualisieren und Speichern einer auf ein mechanisches Bauteil 160 ausgeübten mechanischen Belastung dargestellt. Bei dem Verfahren 1100 wird zunächst bei einem ersten Schritt 1102 eine elektrische Ladungsmenge mittels eines kraftsensitiven Elements erzeugt, dass kraft-, form- oder stoffschlüssig mit dem mechanischen Bauteil verbunden ist, wobei die elektrische Ladungsmenge Q₀ auf einer auf das mechanische Bauteil einwirkenden mechanischen Belastung basiert. Daraufhin wird in einem Schritt 1104 zumindest ein Teil der von dem kraftsensitiven Element erzeugten, elektrischen Ladungsmenge Q₀ zu einer Halbleiter-Nanokristallanordnung eines Anzeigeelements zugeführt, wobei die Halbleiter-Nanokristallanordnung eine basierend auf der jeweils zugeführten elektrischen Ladungsmenge sich ändernde Fluoreszenzeigenschaft aufweist.

Schließlich wird die Fluoreszenzeigenschaft der Halbleiter-Nanokristallanordnung des Anzeigeelements beispielsweise mit einer höher energetischen, optischen Anregung aktiviert, wobei die angeregte Fluoreszenzeigenschaft aufgrund der von dem kraftsensitiven Element zugeführten elektrischen Ladungsmenge Q₀ auf der auf das mechanische Bauteil einwirkenden mechanischen Belastung basiert.

Das kraftsensitive Element 120, zum Beispiel in Form eines Piezoelements, ist kraft-, form- oder stoffschlüssig mit dem zu behandelnden mechanischen Bauteil 160 verbunden bzw. in dasselbe eingebettet. So ist das kraftsensitive Element beispielsweise an/in das Material des mechanischen Bauteils 160 laminiert oder in das Material des mechanischen Bauteils eingebettet.

Wird nun die Halbleiter-Nanokristallanordnung des Anzeigeelements mittels einer hochenergetischen optischen Anregung, zum Beispiel mittels einer UV-Lichtquelle oder eines Lasers usw., zur Emission von Fluoreszenzlicht angeregt, kann dem emittierten Fluoreszenzlicht die auf das mechanische Bauteil einwirkende mechanische Belastung bzw. die bisher auf das mechanische Bauteil eingewirkte mechanische Belastung zugeordnet werden.

Erfindungsgemäß wird also eine sich ändernde bzw. einstellbare Fluoreszenzeigenschaft einer Halbleiter-Nanokristallanordnung 142 für ein Anzeigeelement 140 verwendet, um ein Maß einer von einem kraftsensitiven Element 120 erfassten, auf ein mechanisches Bauteil 160 einwirkenden mechanischen Belastung zumindest bis zum "Auslesen" mittels einer angeregten Fluoreszenzemission, zu speichern. Dabei variiert die Fluoreszenzeigenschaft der Halbleiter-Nanokristallanordnung mit der elektrischen Ladungsmenge, die von einem mit dem zu überwachenden mechanischen Bauteil gekoppelten kraftsensitiven Element bereitgestellt wird.

Bezüglich der erfindungsgemäßen Sensoranordnung 110 sollte beachtet werden, dass ein Auslesen des Anzeigeelements 140 der Sensoranordnung 110 keinen "Reset-Vorgang" hinsichtlich der in der Halbleiter-Nanokristallanordnung 142 gespeicherten Ladungsträger darstellt, da die Ladungsträger auch nach einem Auslesen des Anzeigeelements 140 (zumindest größtenteils) in der Halbleiter-Nanokristallanordnung 142 gespeichert bleiben. Ein Rücksetzen der erfindungsgemäßen Sensoranordnung 110 kann beispielsweise dadurch erfolgen, dass ein entsprechend ausgerichtetes und ausreichend starkes elektrisches Feld an die Halbleiter-Nanokristallanordnung 142 des Anzeigeelements 140 angelegt wird, um die in den Halbleiter-Nanopartikeln 142-2 gespeicherten Ladungsträger aus der Halbleiter-Nanokristallanordnung 142 "herauszuziehen" bzw. zu entfernen. Alternativ kann ein Rücksetz-Vorgang dergestalt ausgebildet sein, Ladungsträger mit einer entgegen gesetzten Polarität zu den in den Halbleiter-Nanopartikeln 142-2 gespeicherten Ladungsträgern der Halbleiter-Nanokristallanordnung 140 zuzuführen, um eine Rekombination der gespeicherten Ladungsträger mit den zugeführten Ladungsträgern und damit ein "Löschen" der gespeicherten Ladungsträger vorzunehmen. Auf diese Weise kann die erfindungsgemäße Sensoranordnung 110 beispielsweise wieder in einen vordefinierten Anfangszustand gebracht werden.

Die erfindungsgemäße Vorgehensweise zur Speicherung bzw. Anzeige und Visualisierung einer auf ein mechanisches Bauteil einwirkenden mechanischen Belastung unter Verwendung eines kraftsensitiven Elements, das eine elektrische Ladungsmenge entsprechend der einwirkenden mechanischen Belastung bereitstellt, und ferner basierend auf einem Anzeigeelement mit einer Halbleiter-Nanokristallanordnung, deren Fluoreszenzeigenschaft sich entsprechend der von dem kraftsensitiven Element zugeführten elektrischen Ladungsmenge ändert, ist gegenüber bisher bekannten Lösungen, die zur Untersuchung eines Prüfkörpers hinsichtlich struktureller Defekte durch einwirkende mechanische Belastungen verwendet werden, aufgrund der materialintegrierten Lösung der erfindungsgemäßen Sensoranordnung an bzw. in das zu untersuchende mechanischer Bauteil von besonderem Vorteil. So lässt sich die als Sensorschichtstapel ausgebildete Sensoranordnung je nach Bauteilgröße und zu realisierender Sollbelastung oder Gesamtbelastung, bis zu der das mechanische Bauteil ohne strukturelle Beschädigungen belastet werden kann, individuell und anwendungsspezifisch mittels des kraftsensitiven Elements und des Anzeigeelements mit der Halbleiter-Nanokristallanordnung zusammensetzen.

Erfindungsgemäß wird also die in Abhängigkeit von der mechanischen Belastung auf das mechanische Bauelement erzeugte Ladungsmenge von dem kraftsensitiven Element definiert. Die von dem kraftsensitiven Element bereitgestellte elektrische Ladungsmenge ist dabei sehr exakt bezüglich einer auf das mechanische Bauteil einwirkenden mechanischen Belastung definierbar. Darüber hinaus lassen sich durch die Verwendung von Halbleiter-Nanokristallen unterschiedlicher Größen prinzipiell verschiedenfarbige Anzeigemodi realisieren, wobei dazu die an das Matrixmaterial der Halbleiter-Nanokristallanordnung angrenzende Elektrode und/oder die in dem Matrixmaterial eingebetteten Halbleiter-Nanopartikel entsprechend ausgebildet und angeordnet werden. Für die Herstellung der als Sensorschichtstruktur ausgebildeten Sensoranordnung steht außerdem eine Vielzahl von unterschiedlichen Materialien, d. h. Polymermaterialien, Leiter- und Halbleiter-Nanokristalle, zur Verfügung, um die jeweils gewünschte Abhängigkeit der angeregten Fluoreszenzemission von der einwirkenden mechanischen Belastung auf das mechanische Bauelement gezielt einstellen zu können.

Somit ermöglicht die erfindungsgemäße Vorgehensweise eine direkte materialintegrierte Detektion, Speicherung und Auswertung bzw. Visualisierung von Belastungszuständen an mechanischen Bauteilen. Die erfindungsgemäße Vorgehensweise ermöglicht ferner, eine definierte mechanische Belastung in Form von Zug, Druck, Stoß, Biegung usw. direkt mit einem optischen Kontrast in der Fluoreszenzemission des Anzeigeelements zu korrelieren. Somit ist bei der vorliegenden Vorgehensweise kein Umweg über elektrische Messgrößen notwendig, wodurch die Bauteilintegration und Handhabung der erfindungsgemäßen Sensoranordnung an bzw. in einem zu untersuchenden mechanischen Bauelement sehr vereinfacht wird.

Darüber hinaus ist zu beachten, dass mit der erfindungsgemäßen Sensoranordnung keine konstruktive Veränderung der zu erwartenden mechanischen Bauteile erforderlich ist. Je nach Spezifik bzw. speziellen Anforderungen der mechanischen Bauelemente bzw. der auf die mechanischen Bauelemente einwirkenden mechanischen Belastungen können die als Indikatorschichten ausgebildeten Sensoranordnungen auf die gesamte Bauteiloberfläche oder auf prädestinierte, sicherheitsrelevante Stellen aufgebracht werden. Ein konstruktiver Eingriff in den Aufbau der bisher verwendeten mechanischen Bauteile ist somit nicht erforderlich.

Im Rahmen der vorliegenden Erfindung wurde eine Vielzahl von Materialien für die unterschiedlichen Bestandteile der erfindungsgemäßen Sensoranordnung dargestellt. Diese dargestellten Materialien bzw. Komponenten stellen jedoch nur eine beispielhafte Aufzählung möglicher Materialien dar und sind nicht als abschließend zu verstehen.

Zusammenfassend ist somit festzustellen, dass das vorliegende erfindungsgemäße Konzept der materialintegrierten Detektion, Speicherung und Auswertung von Belastungszuständen an mechanischen Bauteilen dient. Dabei kann beispielsweise der Focus der Anwendung auf moderne Verbundwerkstoffe gelegt werden, wobei das erfindungsgemäße Konzept aber keinesfalls darauf beschränkt ist. Die erfindungsgemäße Vorgehensweise ist auch geeignet zum Einsatz an herkömmlichen Werkstoffen, wie zum Beispiel Metallen, Metalllegierungen, Kunststoffen usw. Da mechanische Bauteile universell in allen Bereichen der Technik eingesetzt werden, kann das erfindungsgemäße Konzept sehr vielseitig angewendet werden. Exemplarisch sollen hier Bauteile für den Fahrzeugbau, Flugzeugbau, für Windkraftanlagen usw. genannt werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Referenzen

[1] J. M. Lee und Y. Hwang, A novel online rotor condition monitoring system using fiber Bragg grating (FBG) sensors and a rotary optical coupler, Meas. Sci. Technol. 19, 065303 (2008).
[2] Z. Chen und F. Ansari, Fiber Optic Acoustic Emission Distributed Crack Sensor for Large Structures, J. Struct. Control 7N, 119 (2000).
[3] A. L. Efros und A. L. Efros, Interband Absorption ofLight in a Semiconductor Sphere, Sov. Phys. Semicond. 16, 772 (1982).
[4] Y. Kayanuma, Quantum-size effects on interacting electrons and holes in semicondutor microcrystals with spherical shape, Phys. Rev. B 38, 9797 (1988).
[5] AI. L. Efros und M. Rosen, Random Telegraph Signal in the Photoluminescence Intensity of a Single Quantum Dot, Phys. Rev. Lett. 78, 1110 (1997).
[6] D. I. Chepic, A. L. Efros, A. I. Ekimov, M. G. Ivanov, V. A. Kharchenko, I. A. Kudriavtsev und T. V. Yezeva, Auger ionization of semiconductor quantum drops in a glass matrix, J. Lumin. 47, 113 (1990).

## Patentansprüche

1. Informationsspeicher, umfassend
ein Speicherelement mit einer Nanopartikelanordnung (50), welche eine Vielzahl von Nanopartikeln (3) und ein die Nanopartikel umgebendes Stützmaterial (2) umfasst; und
eine strukturierte Elektrode (1);
**dadurch gekennzeichnet dass** das Speicherelement ausgelegt ist,
um in einem ersten Betriebszustand ein bereichsweise selektives elektrisches Felds in der Nanopartikelanordnung (50) mittels der strukturierten Elektrode (1) zu erzeugen, die einen Teilbereich des Stützmaterials (2) kontaktiert, so dass den Nanopartikeln (3), die von dem bereichsweise selektiven elektrischen Feld erfasst werden und die in einer in das Stützmaterial hineinreichenden Verlängerung des Teilbereichs befindlich sind, selektiv mit erhöhter Wahrscheinlichkeit im Vergleich zu Nanopartikeln (3) außerhalb dieser Verlängerung des Teilbereichs Ladungsträger zugeführt werden, und
um in einem zweiten Betriebszustand die Erzeugung des bereichsweise selektiven elektrischen Felds zu beenden, wobei die Nanopartikelanordnung (50) einen Abfluss der zugeführten Ladungsträger aus den Nanopartikeln (3) nach dem Beenden weitgehend verhindert und wobei die zugeführten Ladungsträger eine Fluoreszenzintensität der Nanopartikel (3) verringern, denen die elektrischen Ladungsträger während der Erzeugung des elektrischen Felds bereichsweise selektiv zugeführt wurden, so dass durch optische Anregung der Nanopartikelanordnung (50) der besagte Teilbereich feststellbar ist, in welchem während des ersten Betriebszustands die elektrischen Ladungsträger bereichsweise selektiv den Nanopartikeln (3) zugeführt wurden.

2. Informationsspeicher gemäß Anspruch 1, wobei der Energiebandverlauf durch die Nanopartikelanordnung (50) bezüglich der Ladungsträger innerhalb der Nanopartikel (3) lokale Minima aufweist, so dass in dem zweiten Betriebszustand zumindest ein Teil der zugeführten Ladungsträger in den Nanopartikeln (50) verbleiben, solange eine den zugeführten Ladungsträgern hinzugefügte Energiemenge nicht zur Überwindung eines das lokale Minimum umgebenden Energiewalls ausreicht,
wobei in einem Nanopartikel (3) vorhandene zugeführte Ladungsträger eine strahlende Rekombination innerhalb des Nanopartikels reduzieren und dadurch die Fluoreszenzeigenschaften des Nanopartikels verändern, so dass sich ein Vorhandensein von zugeführten Ladungsträgern in dem Nanopartikel (3) durch ein Ausmaß einer Photolumineszenz, die auf der strahlenden Rekombination beruht, bei der optischen Anregung des Nanopartikels (3) feststellen lässt.

3. Informationsspeicher gemäß einem der vorhergehenden Ansprüche, wobei das Speicherelement ausgelegt ist, neben dem ersten Betriebszustand und dem zweiten Betriebszustand einen dritten Betriebszustand anzunehmen, in dem das Speicherelement ausgelegt ist, gelöscht zu werden durch Anlegen eines löschenden elektrischen Feldes oder durch Bestrahlung mit intensivem, kurzwelligen UV-Licht und ein dadurch verursachtes Abfließen der zugeführten Ladungsträger aus den Nanopartikeln (3).

4. Informationsspeicher gemäß einem der vorhergehenden Ansprüche, wobei das Stützmaterial (2) ein Material umfasst, das ausgewählt ist aus: Dielektrika, wie PMMA, PS, PC, PVDF, PA, PP, PE, PVC, Thermoplaste (PET, Polyetherketone), Duroplaste (Polyester, Formaldehydharze, Epoxidharze, Polyurethane); leitfähigen Materialien, wie Polyelektrolyte, PEDOT, BCP, TPD, PPy, TCNQ-Komplexe, PANI, PVK, Tetracen, Pentacen, Phthalocyanine, Polythiophene, PTCDA, MePTCDI, Chinacridon, Acridon, Indanthron, Flavanthron, Perinon, Alq3, P3HT, CNT's,
wobei das Stützmaterial (2) das gewählte Material in reiner Form, in dotierter Form oder als Derivat umfasst.

5. Informationsspeicher gemäß einem der vorhergehenden Ansprüche, wobei die Nanopartikelanordnung (50) eine erste, zweite und dritte Schicht umfasst, wobei in der ersten Schicht Nanopartikel mit einer Größe in einem ersten Größenbereich überwiegen, in der zweiten Schicht Nanopartikel mit einer Größe in einem zweiten Größenbereich und in der dritten Schicht Nanopartikel mit einer Größe in einem dritten Größenbereich überwiegen.

6. Informationsspeicher gemäß einem der vorhergehenden Ansprüche, weiter umfassend eine Elektrodenanordnung (1, 5), die ausgebildet ist, in dem ersten Betriebszustand ein elektrisches Feld in der Nanopartikelanordnung (50) zu erzeugen, so dass Ladungsträger zu den Nanopartikeln geführt werden und zumindest ein Teil davon als zugeführte Ladungsträger in den Nanopartikeln (3) als die zugeführten Ladungsträger verbleiben.

7. Optischer Informationsträger umfassend einen Informationsspeicher gemäß einem der Ansprüche 1 bis 6.

8. Optischer Informationsträger gemäß Anspruch 7, weiter umfassend eine Lichtquelle zur optischen Anregung des Speicherelements des Informationsspeichers.

9. Verwendung eines Informationsspeichers gemäß einem der Ansprüche 1 bis 6 für ein passives Display.

10. Vorrichtung zum Speichern von Informationen in einen Informationsspeicher gemäß einem der Ansprüche 1 bis 6, umfassend
eine Aufnahme (87), die ausgebildet ist, den Informationsspeicher (9) aufzunehmen; und
eine Elektrodenanordnung (1, 5) umfassend zumindest die strukturierte Elektrode (1), die ausgebildet ist, in Kontakt mit dem Informationsspeicher (9) zu kommen, wenn der Informationsspeicher in der Aufnahme (87) vorliegt, und bereichsweise selektiv ein elektrisches Feld in dem Informationsspeicher (9) zu erzeugen.

11. Vorrichtung gemäß Anspruch 10, wobei die Elektrodenanordnung eine Löschelektrode umfasst, die ausgebildet ist, den Informationsspeicher (9) einem stärkeren elektrischen Feld auszusetzen als dem zum Speichern der Informationen verwendeten elektrischen Feld, wobei die Löschelektrode sich zumindest in einer Dimension derart erstreckt, dass ein Löschen eines im Wesentlichen flächigen Speicherelements durch Auflegen oder Überstreichen des Speicherelements durch die Löschelektrode erfolgen kann, in dem die den Nanopartikeln zuvor zugeführten Ladungsträger mittels eines starken elektrischen Felds aus den Nanopartikeln im Wesentlichen entfernt werden.

12. Vorrichtung gemäß einem der Ansprüche 10 bis 11, weiter umfassend eine Strahlungsquelle zum Löschen des Informationsspeichers, die ausgelegt ist, eine höherenergetische elektromagnetische Strahlung in Richtung des Informationsspeichers auszusenden, deren Energie ausreicht, die den Nanopartikeln zuvor zugeführten Ladungsträger aus den Nanopartikeln zu entfernen.

13. Verfahren zum Speichern von Informationen, umfassend:
Bereitstellen einer Nanopartikelanordnung (50), welche eine Vielzahl von Nanopartikeln (3) und ein die Nanopartikel umgebendes Stützmaterial (2) umfasst;
**gekennzeichnet durch**:
Erzeugung eines bereichsweise selektiven elektrischen Felds in der Nanopartikelanordnung (50) mittels einer strukturierten Elektrode (1), die einen Teilbereich des Stützmaterials (2) kontaktiert, so dass den Nanopartikeln (3), die von dem bereichsweise selektiven elektrischen Feld erfasst werden und die in einer in das Stützmaterial hineinreichenden Verlängerung des Teilbereichs befindlich sind, selektiv mit erhöhter Wahrscheinlichkeit im Vergleich zu Nanopartikeln (3) außerhalb dieser Verlängerung des Teilbereichs Ladungsträger zugeführt werden; und
Beenden der Erzeugung des bereichsweise selektiven elektrischen Felds, wobei die Nanopartikelanordnung (50) einen Abfluss der zugeführten Ladungsträger aus den Nanopartikeln (3) nach dem Beenden weitgehend verhindert und wobei die zugeführten Ladungsträger eine Fluoreszenzintensität der Nanopartikel (3) verringern, denen die elektrischen Ladungsträger während der Erzeugung des elektrischen Felds bereichsweise selektiv zugeführt wurden, so dass durch optische Anregung der Nanopartikelanordnung (50) der besagte Teilbereich feststellbar ist, in welchem während des ersten Betriebszustands die elektrischen Ladungsträger bereichsweise selektiv den Nanopartikeln (3) zugeführt wurden.

14. Verfahren gemäß Anspruch 13, weiter umfassend:
Erzeugung eines löschenden elektrischen Feldes oder einer löschenden höherenergetischen elektromagnetischen Strahlung in der Nanopartikelanordnung (50) zeitlich vor der Erzeugung des bereichsweise selektiven Felds.

15. Verfahren gemäß einem der Ansprüche 13 bis 14, weiter umfassend:
Erzeugung eines zweiten bereichsweise selektiven elektrischen Felds in der Nanopartikelanordnung (50), so dass den Nanopartikeln (3), die von dem zweiten bereichsweise selektiven elektrischen Feld erfasst werden, zusätzliche Ladungsträger zugeführt werden, wobei die Erzeugung des bereichsweise selektiven elektrischen Felds und des zweiten bereichsweise selektiven elektrischen Felds zu unterschiedlichen Zeitpunkten erfolgt.

## Claims

1. Information storage comprising:
a storage element with a nanoparticle arrangement (50) including a plurality of nanoparticles (3) and a support material (2) surrounding the nanoparticles; and
a structured electrode (1);
**characterized in that** the storage element is configured to:
generate, in a first operating state, a regionally selective electric field in the nanoparticle arrangement (50) by means of the structured electrode (1) contacting a subregion of the support material (2), so that the nanoparticles (3) which are detected by the regionally selective electric field and which are located in an extension of the subregion extending into the support material are selectively supplied with charge carriers with increased probability compared to nanoparticles (3) outside this extension of the subregion, and,
terminate, in a second operating state, the generation of the regionally selective electric field, wherein the nanoparticle arrangement (50) largely prevents a discharge of the supplied charge carriers from the nanoparticles (3) after termination and wherein the supplied charge carriers reduce a fluorescence intensity of the nanoparticles (3) to which the electric charge carriers were selectively supplied in regions during the generation of the electric field, so that by optical excitation of the nanoparticle arrangement (50) said subregion can be determined in which the electric charge carriers were selectively supplied in regions to the nanoparticles (3) during the first operating state.

2. Information storage according to claim 1, wherein the course of the energy band through the nanoparticle arrangement (50) comprises local minima with respect to the charge carriers within the nanoparticles (3), so that, in the second operating state, at least a part of the supplied charge carriers remains in the nanoparticles (50) as long as an amount of energy added to the supplied charge carriers is not sufficient to overcome an energy barrier surrounding the local minimum,
wherein supplied charge carriers present in a nanoparticle (3) reduce radiative recombination within the nanoparticle and thereby change the fluorescence properties of the nanoparticle so that a presence of supplied charge carriers in the nanoparticle (3) can be determined by an extent of photoluminescence based on the radiative recombination upon optical excitation of the nanoparticle (3).

3. Information storage according to any one of the preceding claims, wherein the storage element is configured to assume, in addition to the first operating state and the second operating state, a third operating state in which the storage element is configured to be erased by application of an erasing electric field or by irradiation with intense, short-wave UV light and a consequent discharge of the supplied charge carriers from the nanoparticles (3).

4. Information storage according to any one of the preceding claims, wherein the support material (2) comprises a material selected from: dielectrics, such as PMMA, PS, PC, PVDF, PA, PP, PE, PVC, thermoplastics (PET, polyether ketones), thermosetting plastics (polyesters, formaldehyde resins, epoxy resins, polyurethanes); conductive materials, such as polyelectrolytes, PEDOT, BCP, TPD, PPy, TCNQ complexes, PANI, PVK, tetracene, pentacene, phthalocyanines, polythiophenes, PTCDA, MePTCDI, quinacridone, acridone, indanthrone, flavanthrone, perinone, Alq3, P3HT, CNTs,
wherein the support material (2) includes the selected material in pure form, in doped form or as a derivative.

5. Information storage according to any one of the preceding claims, wherein the nanoparticle arrangement (50) includes a first, second and third layer, wherein nanoparticles in a size in a first size range predominate in the first layer, nanoparticles in a size in a second size range predominate in the second layer and nanoparticles in a size in a third size range predominate in the third layer.

6. Information storage according to any one of the preceding claims, further including an electrode arrangement (1, 5) configured to generate an electric field in the nanoparticle arrangement (50) in the first operating state, so that charge carriers are guided to the nanoparticles and at least a part thereof remain in the nanoparticles (3) as the supplied charge carriers.

7. Optical information carrier including an information storage according to any one of claims 1 to 6.

8. Optical information carrier according to claim 7, further including a light source for optical excitation of the storage element of the information storage.

9. Usage of an information storage according to any one of claims 1 to 6 for a passive display.

10. Device for storing information in an information storage according to any one of claims 1 to 6, comprising:
a receptacle (87) configured to receive the information storage (9); and
an electrode arrangement (1, 5) including at least the structured electrode (1) which is configured to come into contact with the information storage (9), when the information storage is present in the receptacle (87), and to selectively generate an electric field in the information storage in regions.

11. Device according to claim 10, wherein the electrode arrangement (1, 5) includes an erasing electrode configured to expose the information storage (9) to a stronger electric field than the electric field used for storing information, wherein the erasing electrode extends in at least one dimension such that erasure of an substantially flat storage element can be carried out by applying or sweeping the storage element by means of the erasing electrode, in which the charge carriers previously supplied to the nanoparticles are substantially removed from the nanoparticles by means of a strong electric field.

12. Device according to any one of claims 10 to 11, further including a radiation source for erasing the information storage, configured to emit a higher-energy electromagnetic radiation in the direction of the information storage, the energy of which is sufficient to remove the charge carriers previously supplied to the nanoparticles from the nanoparticles.

13. Method for storing information, comprising:
providing a nanoparticle arrangement (50) including a plurality of nanoparticles (3) and a support material (2) surrounding the nanoparticles;
**characterized by**:
generation of a regionally selective electric field in the nanoparticle arrangement (50) by means of the structured electrode (1) contacting a subregion of the support material (2), so that the nanoparticles (3) which are detected by the regionally selective electric field and which are located in an extension of the subregion extending into the support material, are selectively supplied with charge carriers with increased probability compared to nanoparticles (3) outside this extension of the subregion; and
termination of the generation of the regionally selective electric field, wherein the nanoparticle arrangement (50) largely prevents a discharge of the supplied charge carriers from the nanoparticles (3) after termination and wherein the supplied charge carriers reduce a fluorescence intensity of the nanoparticles (3), to which the electric charge carriers were selectively supplied in regions during the generation of the electric field, so that by optical excitation of the nanoparticle arrangement (50) said subregion can be determined in which the electric charge carriers were selectively supplied in regions to the nanoparticles (3) during the first operating state.

14. Method according to claim 13, further comprising:
generation of an erasing electric field or of an erasing higher-energy electromagnetic radiation in the nanoparticle arrangement (50) prior to the generation of the regionally selective field.

15. Method according to any one of claims 13 or 14, further comprising:
generation of a second regionally selective electric field in the nanoparticle arrangement (50), so that the nanoparticles (3) detected by the second regionally selective electric field are supplied with additional charge carriers, wherein generation of the regionally selective electric field and the second regionally selective electric field is carried out at different times.

## Revendications

1. Dispositif de mémoire d'informations, comportant
un élément de mémoire avec un aménagement de nanoparticules (50) qui comporte une pluralité de nanoparticules (3) et un matériau de support (2) entourant les nanoparticules; et
une électrode structurée (1);
**caractérisé par le fait que** le dispositif de mémoire est conçu
pour générer, dans un premier état de fonctionnement, un champ électrique sélectif par zone dans l'aménagement de nanoparticules (50) au moyen de l'électrode structurée (1) qui entre en contact avec une zone partielle du matériau de support (2), de sorte que vers les nanoparticules (3) qui sont détectées par le champ électrique sélectif par zone et qui se situent dans un prolongement de la zone partielle pénétrant dans le matériau de support soient alimentés des porteurs de charge de manière sélective avec une probabilité accrue en comparaison avec les nanoparticules (3) en-dehors de ce prolongement de la zone partielle, et
pour terminer, dans un deuxième état de fonctionnement, la génération du champ électrique sélectif par zone, où l'aménagement de nanoparticules (50) empêche amplement une évacuation des porteurs de charge alimentés hors des nanoparticules (3) après la fin, et où les porteurs de charge alimentés réduisent une intensité de fluorescence des nanoparticules (3) vers lesquelles les porteurs de charge électrique ont été alimentés de manière sélective par zone pendant la génération du champ électrique, de sorte que par une excitation optique de l'aménagement de nanoparticules (50) puisse être déterminée la zone partielle dans laquelle les porteurs de charges électriques ont été alimentés de manière sélective par zone vers les nanoparticules (3) pendant le premier état de fonctionnement.

2. Dispositif de mémoire d'informations selon la revendication 1, dans lequel l'évolution de la bande d'énergie à travers l'aménagement de nanoparticules (50) en ce qui concerne les porteurs de charge dans les nanoparticules (3) présente des minimums locaux, de sorte que, dans le deuxième état de fonctionnement, au moins une partie des porteurs de charge alimentés restent dans les nanoparticules (50) tant qu'une quantité d'énergie ajoutée aux porteurs de charge alimentés n'est pas suffisante pour franchir un mur d'énergie entourant le minimum local,
dans lequel les porteurs de charge alimentés présents dans une nanoparticule (3) réduisent une recombinaison rayonnante dans la nanoparticule et modifient de ce fait les propriétés de fluorescence de la nanoparticule, de sorte que la présence de porteurs de charge alimentés dans la nanoparticule (3) peut être constatée par une mesure d'une photoluminescence sur base de la recombinaison rayonnante lors de l'excitation optique de la nanoparticule (3).

3. Dispositif de mémoire d'informations selon l'une des revendications précédentes, dans lequel l'élément de mémoire est conçu pour adopter, en-dehors du premier état de fonctionnement et du deuxième état de fonctionnement, un troisième état de fonctionnement dans lequel l'élément de mémoire est conçu pour être effacé en appliquant un champ électrique d'effacement ou par irradiation à l'aide d'une lumière UV intense à ondes courtes et une évacuation des porteurs de charge alimentés ainsi provoquée hors des nanoparticules (3).

4. Dispositif de mémoire d'informations selon l'une des revendications précédentes, dans lequel le matériau de support (2) comprend un matériau qui est choisi parmi: les diélectriques, tels que PMMA, PS, PC, PVDF, PA, PP, PE, PVC, les thermoplastiques (PET, polyéther cétones), les thermodurcissables (polyesters, résines de formaldéhyde, résines époxy, polyuréthanes); les matériaux conducteurs, tels que poly-électrolytes, PEDOT, BCP, TPD, PPy, complexes TCNQ, PANI, PVK, tétracène, pentacène, phtalocyanines, polythiophènes, PTCDA, MePTCDI, quinacridone, acridone, indanthrone, flavanthrone, périnone, Alq3, P3HT, CNT,
dans lequel le matériau de support (2) comporte le matériau sélectionné sous forme pure, sous forme dopée ou sous forme de dérivé.

5. Dispositif de mémoire d'informations selon l'une des revendications précédentes, dans lequel l'aménagement de nanoparticules (50) comporte une première, une deuxième et une troisième couche, dans lequel prédominent, dans la première couche, les nanoparticules d'une grosseur dans une première plage de grosseurs, prédominent, dans la deuxième couche, les nanoparticules d'une grosseur dans une deuxième plage de tailles et, dans la troisième couche, les nanoparticules d'une grosseur dans une troisième plage de grosseurs.

6. Dispositif de mémoire d'informations selon l'une des revendications précédentes, comportant par ailleurs un aménagement d'électrodes (1, 5) qui est conçu pour générer, dans le premier état de fonctionnement, un champ électrique dans l'aménagement de nanoparticules (50), de sorte que des porteurs de charge soient guidés vers les nanoparticules et qu'au moins une partie de ces derniers restent, comme porteurs de charge alimentés vers les nanoparticules (3) comme les porteurs de charge alimentés.

7. Support optique d'informations comportant un dispositif de mémoire d'informations selon l'une des revendications 1 à 6.

8. Support optique d'informations selon la revendication 7, comportant par ailleurs une source de lumière destinée à exciter optiquement l'élément de mémoire du dispositif de mémoire d'informations.

9. Utilisation d'un dispositif de mémoire d'informations selon l'une des revendications 1 à 6 pour un affichage passif.

10. Appareil pour mémoriser les informations dans un dispositif de mémoire d'informations selon l'une des revendications 1 à 6, comportant
un moyen de réception (87) qui est conçu pour recevoir le dispositif de mémoire d'informations (9); et
un aménagement d'électrodes (1, 5) comportant au moins l'électrode structurée (1) qui est conçue pour entrer en contact avec le dispositif de mémoire d'informations (9) lorsque le dispositif de mémoire d'informations est présent dans le moyen de réception (87), et pour générer de manière sélective par zone un champ électrique dans le dispositif de mémoire d'informations (9).

11. Dispositif selon la revendication 10, dans lequel l'aménagement d'électrodes comporte une électrode d'effacement qui est conçue pour soumettre le dispositif de mémoire d'informations (9) à un champ électrique plus fort que le champ électrique utilisé pour mémoriser les informations, dans lequel l'électrode d'effacement s'étend au moins dans une dimension de sorte qu'un effacement d'un élément de mémoire sensiblement plat puisse avoir lieu en plaçant sur ou en balayant l'élément de mémoire par l'électrode d'effacement, où les porteurs de charge alimentés auparavant vers les nanoparticules sont sensiblement évacués des nanoparticules au moyen d'un puissant champ électrique.

12. Dispositif selon l'une des revendications 10 à 11, comportant par ailleurs une source de rayonnement pour effacer le dispositif de mémoire d'informations qui est conçue pour émettre un rayonnement électromagnétique d'une énergie supérieure en direction du dispositif de mémoire d'informations dont l'énergie est suffisante pour évacuer hors des nanoparticules les porteurs de charge alimentés auparavant vers les nanoparticules.

13. Procédé de mémorisation d'informations, comportant le fait de:
prévoir un aménagement de nanoparticules (50) qui comporte une pluralité de nanoparticules (3) et un matériau de support (2) entourant les nanoparticules;
**caractérisé par** le fait de:
générer un champ électrique sélectif par zone dans l'aménagement de nanoparticules (50) au moyen d'une électrode structurée (1) qui entre en contact avec une zone partielle du matériau de support (2), de sorte que vers les nanoparticules (3) qui sont détectées par le champ électrique sélectif par zone et qui se situent dans un prolongement de la zone partielle pénétrant dans le matériau de support, soient alimentés des porteurs de charge de manière sélective avec une probabilité accrue en comparaison avec les nanoparticules (3) en-dehors de ce prolongement de la zone partielle; et
terminer la génération du champ électrique sélectif par zone, où l'aménagement de nanoparticules (50) empêche amplement une évacuation des porteurs de charge alimentés hors des nanoparticules (3) après la fin et où les porteurs de charge alimentés réduisent une intensité de fluorescence des nanoparticules (3) vers lesquelles ont été alimentés de manière sélective par zone les porteurs de charge électrique pendant la génération du champ électrique, de sorte que par l'excitation optique de l'aménagement de nanoparticules (50) puisse être déterminée ladite zone partielle dans laquelle les porteurs de charges électriques ont été alimentés de manière sélective par zone vers les nanoparticules (3) pendant le premier état de fonctionnement.

14. Procédé selon la revendication 13, comportant par ailleurs le fait de:
générer un champ électrique d'extinction ou un rayonnement électromagnétique d'extinction à énergie supérieure dans l'aménagement de nanoparticules (50) avant la génération du champ sélectif par zone.

15. Procédé selon l'une des revendications 13 à 14, comportant par ailleurs le fait de:
générer un deuxième champ électrique sélectif par zone dans l'aménagement de nanoparticules (50), de sorte que vers les nanoparticules (3) qui sont détectées par le deuxième champ électrique sélectif par zone soient alimentés des porteurs de charge additionnels, où la génération du champ électrique sélectif par zone et du deuxième champ électrique sélectif par zone ait lieu à des moments différents.
